# EUROPÄISCHE PATENTANMELDUNG

(11) **EP 1 437 818 A2**
(43) Veröffentlichungstag der Anmeldung: **14.07.2004**
(21) Anmeldenummer: 04004865.4
(22) Anmeldetag: 01.06.2001
(51) Int. Cl.: H02K 3/12, H02K 3/50

(54) **Wicklung für eine elektrische Maschine**

(30) Priorität: 08.06.2000 DE 10028380; 09.03.2001 DE 10111509
(62) Teilanmeldung aus: 01945235.8
(71) Anmelder: Continental ISAD Electronic Systems GmbH & Co. oHG, 86899 Landsberg/Lech (DE)
(72) Erfinder: Holzheu, Georg, 89956 Schongau (DE); Masberg, Ulrich, 51503 Rösrath (DE); Menhart, Michael, 86859 Holzhausen-Igling (DE); Gründl, Andreas, 81377 München (DE); Hoffmann, Bernhard, 82319 Starnberg (DE); Rasch, Reinhard, 82229 Hechendorf (DE)
(74) Vertreter: Lippich, Wolfgang

(57) **Zusammenfassung**

Die Erfindung betrifft eine Wicklung für eine elektrische Maschine mit einem Ständer und/oder Läufer mit Nuten (34), wobei die Wicklung mehrere überlappende Spulen (50, 52, 50', 52', 50", 52") mit jeweils wenigstens einer vollständigen, aus Formteilen (1, 2, 3) hergestellten Windung umfaßt, wobei die Spulen (50, 52, 50', 52', 50", 52") Nutstäbe (8) und an den Stirnseiten des Ständers bzw. Läufers liegende Verbindungsleiter (6) aufweisen, wobei die Verbindungsleiter (6) der überlappenden Spulen (50, 52, 52', 50", 52") verschränkt und somit in Lagen (28, 30) angeordnet sind. Die Wicklung ist dadurch gekennzeichnet, daß die Wicklung durch lagenweises Einsetzen von L-förmigen Formteilen (1, 2, 3) in die Nuten (34) und Verbinden von Formteil-Verbindungstellen (13, 16), die von den L-förmigen Formteilen (1, 2, 3) der nächsten eingesetzten Lage (28, 30) von Formteilen (1, 2, 3) verdeckt werden, hergestellt ist.

## Beschreibung

Die Erfindung betrifft ein eine Wicklung für eine elektrische Maschine.

Die Ständer von elektrischen Maschinen (z.B. Asynchron- oder Synchronmaschinen in Rotations- oder Linearbauart, wobei mit dem Begriff "elektrische Maschinen" sowohl Motoren als auch Generatoren gemeint sind) sind im allgemeinen mit einer Wicklung ausgestattet. Der durch diese fließende Strom erzeugt ein wanderndes magnetisches Feld, dessen Wirkung über den Luftspalt zwischen Ständer und Läufer hinweg die Bewegung des Läufers hervorruft. Bei manchen Bauformen sind auch die Läufer mit einer Wicklung ausgerüstet. Die Wicklung ist i.a. in den Nuten eines Ständer- bzw. Läuferkörpers aufgenommen, die bei einer Radialfeldmaschine in der Regel parallel oder in einem kleinen Winkel zur Drehachse verlaufen.

Bei einer Mehrphasen-Wechselstrommaschine hat die Wicklung i.a. eine der Anzahl der Phasen entsprechende Anzahl von Strängen, die zumeist jeweils mehrere Spulen mit einer oder mehreren Windungen umfassen. Jede Spule liegt in der Regel mit ihren beiden sog. "Spulenseiten" in den Nuten, während die sog. Wickelköpfe die in den Nuten verlaufenden Wicklungabschnitte an den Stirnseiten des Ständerkörpers miteinander verbinden. Die Spulen oder Reihenschaltungen mehrerer Spulen eines Stranges sind i.a. an einem Ende mit einer Stromzuführung verbunden, am anderen Ende sind die Stränge z.B. miteinander am sog. Sternpunkt verbunden. Alternativ können die Stränge auch im Dreieck geschaltet sein.

Da sich zur Erzeugung eines Magnetfeldes mit angenähert sinusförmigem Feldverlauf die Spulenseiten verschiedener Stränge in aufeinanderfolgenden Nuten oder Nutgruppen abwechseln, sind die Spulen verschiedener Stränge i.a. überlappend angeordnet, so daß zwischen den beiden Spulenseiten einer Spule jeweils Spulenseiten von Spulen anderer Stränge zu liegen kommen. Die Wickelköpfe der überlappenden Spulen müssen sich daher an den Stirnseiten des Ständer- bzw. Läuferkörpers ausweichen. Hierfür sind verschiedene Möglichkeiten der Wickelkopfanordnung bekannt. Bei der sog. Zwei- bzw. Drei-Etagen-Wicklung liegen die Wickelköpfe überlappender Spulen z.B. in verschiedenen, in der Nutlängsrichtung übereinanderliegenden Etagen. Bei der Korbwicklung verbinden sämtliche Wickelköpfe eine Etage mit einer anderen, so daß der Eindruck eines Korbrandes entsteht. Diese Wickelkopfanordnungen sind z.B. in "Fachkunde Elektrotechnik", Verlag Europa-Lehrmittel, Nourney, Vollmer GmbH & Co., 22. Auflage 1999, auf S. 331 dargestellt. Derartige Wickelköpfe sind relativ ausladend und nehmen fast die gesamte Stirnseite des Ständerkörpers ein.

Bei gewickelten Drahtspulen ragen die Wickelköpfe außerdem wegen des Zwangs zur Einhaltung von bestimmten Mindestbiegeradien relativ weit aus den Nuten heraus, was die Erzielung einer kompakten Wickelkopfanordnung mit Drahtwicklungen erschwert. Mit einer Drahtwicklung erreicht man zudem meist nur einen relativ geringen Nut-Füllfaktor von ca. 40%, da der Draht i.a. einen kreisrunden Querschnitt aufweist, während die Nuten meist geradflankig sind. Das Bewickeln eines Ständer- oder Läuferkörpers mit Drahtspulen ist relativ aufwendig und schwer automatisierbar. Aus diesen Gründen wurde bereits frühzeitig (z.B. in der DE-AS-10 06 506) vorgeschlagen, die Wicklung elektrischer Maschinen nicht aus Drahtgebilden aufzubauen, sondern aus vorgefertigten Formteilen mit i.a. rechteckigem Querschnitt. Diese werden in der Regel einzeln in die Nuten eines Ständerkörpers eingesetzt und nach dem Einsetzen an den Stirnseiten elektrisch miteinander zu Spulen verbunden.

Unter "Nutstäben" versteht man diejenigen Wicklungsabschnitte, die in den Nuten verlaufen und die Spulenseiten bilden, unter "Verbindungsleitern" diejenigen Abschnitte, die an den Stirnseiten des Ständerkörpers verlaufen und die Wickelköpfe bilden.

Durch die Verwendung von Formteilen mit geeignetem Querschnitt läßt sich der Füllfaktor der Nuten erhöhen. Sofern die Formteile am Übergang zwischen Nutstab und Verbindungsleiter abgewinkelt vorgefertigt sind, entfällt das Problem der Mindestbiegeradien, so daß im Prinzip kompakte Wickelkopfanordnungen erreicht werden können. Bei den im Stand der Technik bekannten Formteilwicklungen mit überlappenden Spulen werden in der Regel viele verschiedene, zudem oft kompliziert geformte Formteile benötigt, um das Ausweichen der Wikkelköpfe überlappender Spulen zu erreichen.

Die DE 197 36 645 A1 schlägt beispielsweise vor, bei einer elektrischen Maschine die Wicklung aus C-förmigen Formteilen aufzubauen. Zur Bildung einer Windung einer Spule werden jeweils zwei C-förmige Formteile derart in entsprechende Nuten eingesetzt, daß die offenen Seiten einander zugewandt sind, und die Schenkel der Formteile an einer Stirnseite miteinander verbunden werden. Um eine möglichst kompakte Wickelkopfanordnung zu erzielen, sind die Schenkel, welche die Verbindungsleiter bilden, flacher ausgebildet als die in den Nuten liegenden Abschnitte der Formteile (die Nutstäbe). Die Wickelköpfe überlappender Spulen weichen sich dadurch aus, daß Verbindungsleiter gegenüber den mit diesen verbundenen Nutstäben in Richtung der Nuttiefe versetzt sind und so die Verbindungsleiter einer Spule auf einer bestimmten Höhe der Nuttiefe gebündelt werden. Diese Abkröpfung wird durch ein in Richtung der Nuttiefe verlaufendes Verbindungsstück zwischen Nutstab und Verbindungsleiter erreicht. Da die Nutstäbe verschieden weit abgekröpft werden müssen, werden viele verschiedene Formteile benötigt. Die der Abkröpfung dienenden Verbindungsstücke an den Stirnseiten benötigen zusätzlichen Raum. Die Druckschrift schlägt weiterhin vor, die C-förmigen Formteile aus Blechstanzteilen herzustellen, die derart gefaltet werden, daß im Bereich des Nutstabs so viele Blechlagen übereinanderliegen, daß das gewünschte Verhältnis der Nutstab-Dicke zur Verbindungsleiter-Dicke erreicht wird.

Die DE 44 11 749 C2 betrifft eine Ständerwicklung aus U-förmigen Formteilen, welche nicht an den Stirnseiten, sondern im Nutbereich miteinander verschweißt werden. Die gesamte Wicklung wird zunächst ohne Ständerkörper erstellt. Dieser wird erst danach um die fertige Wicklung herum aufgebaut, indem einzelne Segmente aus weichmagnetischem Material in die Wicklung eingesetzt werden. Auch bei dieser Wicklung sind die Verbindungsleiter flacher als die Nutstäbe ausgebildet, um das Ausweichen der verschiedenen Stränge an den Stirnseiten zu ermöglichen. Da bei der hier gezeigten dreiphasigen Wellenwicklung mit einer Nut pro Pol und Strang jedoch maximal zwei Stränge parallel geführt werden, ist das Ausweichen einfach dadurch realisierbar, daß die Verbindungsleiter abwechselnd in einer - in Richtung der Nuttiefe - oberen oder unteren von zwei Verbindungsleiter-Schichten liegen. Die Bildung einer wendelförmigen Spule ist bei dieser Konstruktion nicht vorgesehen, da mit den gezeigten Formteilen kein Wechsel von einer Wicklungslage in die andere möglich ist. Mit "Wicklungslage" sind alle Nutstäbe einer Wicklung gemeint, die den gleichen Abstand zum Nutboden aufweisen.

Die DE 43 21 236 C1 offenbart eine Wicklung aus S-förmigen Formteilen, die jeweils aus einem Nutstab und zwei Verbindungsleiter-Hälften bestehen, die an den beiden Enden des Nutstabs zu verschiedenen Seiten abgewinkelt sind. Die Verbindungsleiter sind genauso dick wie die Nutstäbe und verlaufen schräg in Richtung der Nutbreite und der Nutlängsrichtung, wobei alle Verbindungsleiter-Hälften einer Wicklungslage nebeneinander, also im gleichen Abstand zum Nutboden, Platz finden. Bei vielen überlappenden Strängen ragen die Verbindungsleiter-Hälften der Formteile daher relativ weit aus den Nuten hervor. Die Formteile werden vom Nutkopf aus in die Nuten eines Ständerkörpers eingesetzt und daraufhin die jeweils übereinanderliegenden Enden von zu verschiedenen Wicklungslagen gehörenden Verbindungsleiter-Hälften miteinander verbunden. Auf diese Weise wird eine Wellenwicklung mit mehreren Strängen erzeugt, wobei jeder Strang bei jedem Wickelkopfdurchgang die Wicklungslage wechselt.

Diese Wicklung wird in der DE 196 32 390 A1 dahingehend unter Verwendung relativ aufwendiger Formteile weiterentwickelt, daß die Verbindungsleiter-Hälften jeweils um eine halbe Nutstabdicke in Richtung der Nuttiefe versetzt an den Enden des Nutstabs angesetzt sind. Daher wird ein Strang beim Durchlaufen der Verbindungsstelle zwischen zwei Verbindungsleiter-Hälften zwar immer noch um eine Nutstabdicke versetzt, dies wird aber durch die Versetzung der Verbindungsleiter gegenüber den Nutstäben kompensiert. Auch hier ist eine Wellenwicklung gezeigt. Die Formteile weisen eine komplizierte Form auf und sind daher in der Herstellung kostspielig.

Aus der US-A-5 422 526, nach der der Oberbegriff der unabhängigen Ansprüche gebildet wurde, ist ein Verfahren zur Herstellung einer Wicklung aus Formteilen für einen Ständer einer elektrischen Maschine mit Nuten bekannt. Die fertige Wicklung umfaßt mehrere überlappende Spulen mit mehreren vollständigen Windungen, die an den Stirnseiten des Ständers liegende Verbindungsleiter aufweisen. Die Verbindungsleiter von überlappenden Spulen sind verschränkt und sind somit in Lagen angeordnet.

Die Erfindung stellt eine Wicklung für eine elektrische Maschine mit einem Ständer und/oder Läufer mit Nuten bereit, wobei die Wicklung mehrere überlappende Spulen mit jeweils wenigstens einer vollständigen, aus Formteilen hergestellten Windung umfaßt, wobei die Spulen Nutstäbe und an den Stirnseiten des Ständers bzw. Läufers liegende Verbindungsleiter aufweisen, wobei die Verbindungsleiter der überlappenden Spulen verschränkt und somit in Lagen angeordnet sind. Die Wicklung ist dadurch gekennzeichnet, daß sie durch lagenweises Einsetzen von L-förmigen Formteilen in die Nuten und Verbinden von Formteil-Verbindungstellen, die von den L-förmigen Formteilen der nächsten eingesetzten Lage von Formteilen verdeckt werden, hergestellt ist. Vorzugsweise sind die Formteile an den Verbindungsstellen verlötet.

Bei einer vorteilhaften Ausgestaltung bildet jeweils der eine Schenkel eines solchen L-förmigen Formteils einen in einer Nut liegenden Nutstab und der andere Schenkel einen an einer Stirnseite des Ständers bzw. Läufers liegenden Verbindungsleiter.

Vorzugsweise umfaßt die Wicklung mehrere Spulen, die aus in den Nuten liegenden Nutstäben und aus an den Stirnseiten des Ständers bzw. Läufers liegenden Verbindungsleitern aufgebaut sind, Bei einer vorteilhaften Ausgestaltung sind die Verbindungsleiter flacher als die Nutstäbe ausgebildet sind. Die Wicklung ist beispielsweise als eine gesehnte Mehrphasenwicklung mit zwei Nuten pro Pol und Strang ausgeführt.

Bei einer vorteilhaften Ausgestaltung sind mindestens zwei Spulen jeweils in Reihe geschaltet, wobei der Strom eine der Spulen in Richtung Nutkopf und die andere Spule in Richtung Nutboden durchfließt.

Die Wicklung kann beispielsweise aus einem Formteilsatz aufgebaut werden. Der Formteilsatz umfaßt beispielsweise einen Typ eines L-förmigen Formteils oder zwei Typen von L-förmigen Formteilen, deren Verbindungsleiterschenkel flacher als die Nutstabschenkel ausgebildet sind. Bevorzugt umfaßt der Formteilsatz zwei Typen von L-förmigen Formteilen, von denen ein Typ dazu ausgebildet ist, eine Verbindung in ein und derselben Wicklungslage zu bilden, während der andere dazu ausgebildet ist, eine Überführung von einer Wicklungslage in die nächste zu bilden.

Eine Wicklung der beschriebenen Art ist vorteilhaft aus nur einem oder zwei Formteiltypen aufgebaut, wobei die Wicklung ggf. zusätzlich ein oder zwei weitere Formteiltypen zum Verschalten der Wicklung aufweist.

Die Wicklung wird beispielsweise durch mehrmaliges Durchlaufen der folgenden, die Schritte a und b umfassenden Schrittfolge hergestellt: (a) Einsetzen von L-förmigen Formteilen in die Nuten des Ständers oder Läufers, bis eine ganze oder ein Teil einer Wicklungslage eingesetzt ist, und (b) Verbinden der in Schritt (a) eingesetzten Formteile mit Stromschienen oder mit in einem vorherigen Durchlauf eingesetzten Formteilen.

Die Erfindung wird nun anhand von bevorzugten Ausführungsbeispielen und der beigefügten beispielhaften Zeichnung näher erläutert. In der Zeichnung zeigen:
- Fig. 1a: eine perspektivische Ansicht eines ersten Typs eines L-förmigen Formteils;
- Fig. 1b: Schnitte entlang der Linien A-A und B-B in Fig. 1;
- Fig. 2: eine perspektivische Ansicht eines zweiten Typs eines L-förmigen Formteils;
- Fig. 3: eine perspektivische Ansicht eines weiteren Typs eines L-förmigen Formteils;
- Fig. 4: eine perspektivische Ansicht eines noch weiteren, U-förmigen Formteil-Typs;
- Fig. 5a-c: perspektivische Ansichten von auf verschiedene Weise zusammengesetzten L-förmigen Formteilen;
- Fig. 6: eine perspektivische Ansicht einer Anordnung mehrerer L-förmiger Formteile;
- Fig. 7: die Ansicht der Fig. 6, mit einem weiteren L-förmigen Formteil;
- Fig. 8: die Ansicht der Fig. 7, mit einem noch weiteren L-förmigen Formteil;
- Fig. 9: eine perspektivische Ansicht eines Ständer- oder Läuferausschnitts einer elektrischen Maschine mit Nuten, in die L-förmige Formteile eingesetzt sind;
- Fig. 10a-c: schematische Draufsichten auf die Nuten des Ständer- oder Läuferkörpers zu verschiedenen Zeitpunkten während des Herstellens der Wicklung;
- Fig. 11: eine schematische Draufsicht auf die Nuten eines Ständer- oder Läuferkörpers mit eingesetzten U-Formteilen;
- Fig. 12: eine schematische Ansicht der Stirnseite eines bewickelten Ständerkörpers;
- Fig. 13: ein Wickelschema einer Dreiphasenwicklung gemäß einem Ausführungsbeispiel;
- Fig. 14: eine perspektivische Ansicht einer ersten Ausführungsform eines Stromschienenpakets;
- Fig. 15: eine perspektivische Ansicht der Stromschiene für den Sternpunkt aus Fig. 15;
- Fig. 16: eine perspektivische Ansicht einer weiteren Ausführungsform des erfindungsgemäßen Stromschienenpakets;
- Fig. 17: eine schematische Querschnittsdarstellung einer Verbindungsstelle einer Stromschiene;
- Fig. 18a: eine perspektivische Ansicht einer weiteren Ausführungsform eines Stromschienenpakets;
- Fig. 18b: eine schematisierte Draufsicht auf eine Stromschiene
- Fig. 19: eine perspektivische Ansicht eines Abschnitts eines vollständig mit Wicklung und Stromschienenpaket bestückten Ständers.

In den Figuren sind funktionsgleiche oder -ähnliche Teile zum Teil mit gleichen Bezugszeichen gekennzeichnet.

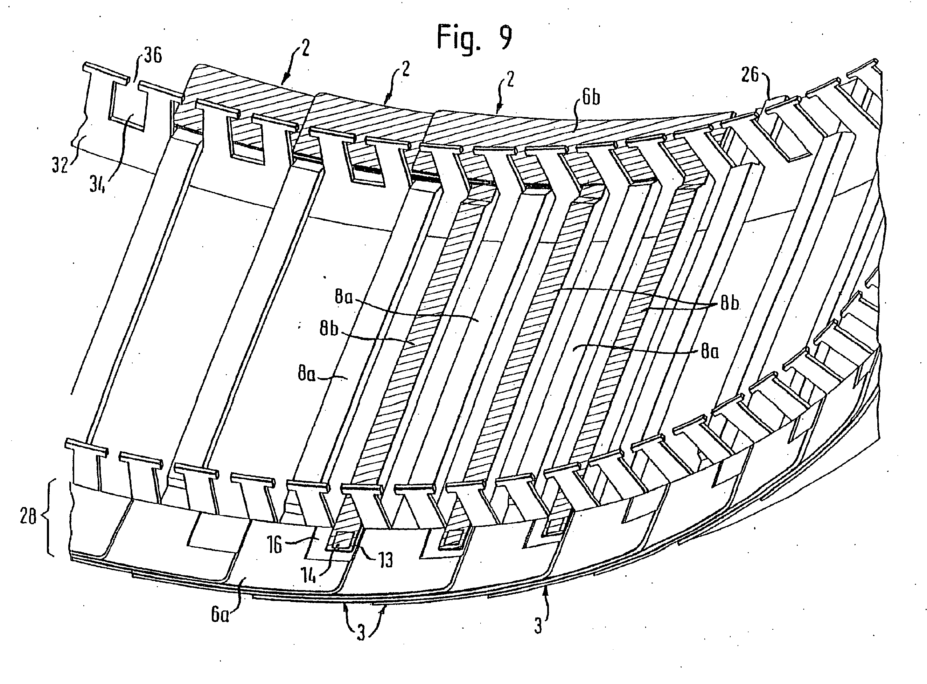

Zur Vereinfachung erfolgt die folgende Erläuterung der bevorzugten Ausführungsformen anhand von Ständerwicklungen; gleichermaßen gilt das Gesagte aber auch für entsprechende Läuferwicklungen. Beispielsweise zeigen die Fig. 9-11 gleichermaßen Ansichten eines Ständers (bei Fig. 9 einer Innenläufermaschine) wie auch eines Läufers (bei Fig. 9 einer Außenläufermaschine).

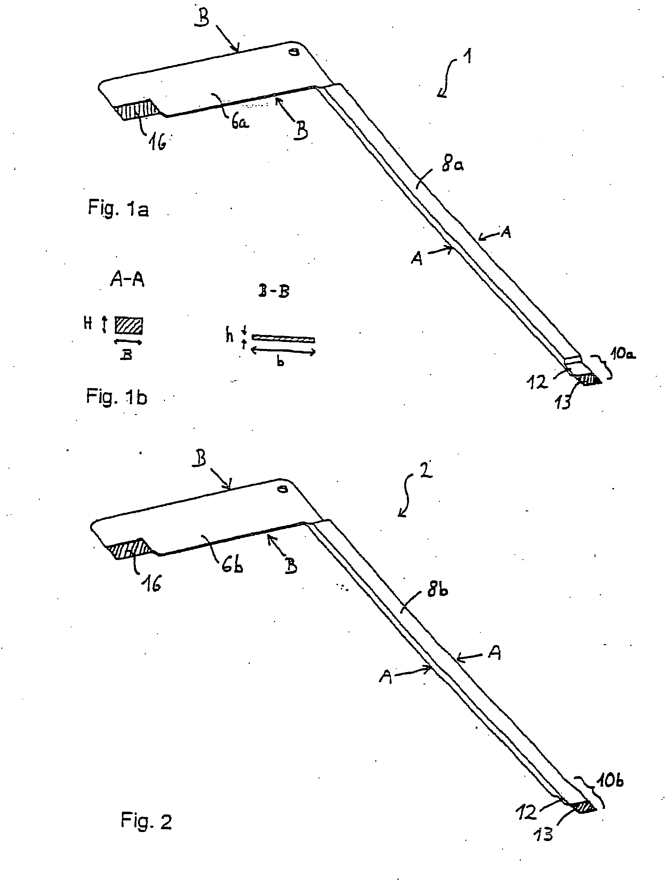

Fig. 1 zeigt einen ersten Formteil-Typ. Bevor diese Figur näher erläutert wird, folgen zunächst einige Anmerkungen zu den bevorzugten Ausführungsformen.

Die bevorzugten Ausführungsformen beziehen sich auf Wicklungen für einen Ständer einer Radialfeldmaschine in Innenläuferbauart. Im folgenden wird daher die Nutlängsrichtung als Axialrichtung und die Richtung der Nüttiefe als Radialrichtung bezeichnet. Die beschriebenen Wicklungen sind aber auch für Außenläufer- und Linearmaschinen geeignet; ebenso können sie als Läuferwicklungen verwendet werden. Auch eine Axialfeldmaschine kann mit einer entsprechenden Wicklung bestückt werden, sofern die auf unterschiedlichen Stirnseiten liegenden Verbindungsleiter an die jeweilige Zylindermantelform der Stirnseite angepaßt sind.

Der in den Figuren gezeigte Ständer umfaßt zur Führung des magnetischen Flusses einen Ständerkörper in Form eines Blechpakets, das zur Aufnahme der Nutstäbe der Wicklung genutet ist. Der nicht genutete Teil bildet den sog. Rücken. Unter "Stirnseiten" werden jeweils die Seiten des Ständerkörpers verstanden, an welchen die Nuten quer angeschnitten sind. Bei den gezeigten Radialfeldmaschinen sind dies die axialen Stirnflächen des Ständerkörpers.

Mit "Stromschienen" werden die Stromleiter bezeichnet, über die die Wicklung mit der Stromversorgung verbunden ist. Bei den beschriebenen Mehrphasenwicklungen wird in der Regel eine der Anzahl der Phasen entsprechende Anzahl von Stromschienen für die Stromzuführung und - bei einer Sternschaltung - eine Stromschiene für den Sternpunkt, den Verbindungspunkt der Phasenstränge der Wicklung, verwendet. Bei einer Dreieckschaltung der Stränge entfällt die Stromschiene für den Sternpunkt. Werden sämtliche Stromschienen nebeneinander geführt, bilden sie zusammen ein Stromschienenpaket.

Die nachstehend einzeln erläuterten Aspekte der beschriebenen Ausführungsformen sind in der Zeichnung meist in Kombination miteinander dargestellt, jeder Aspekt kann aber auch einzeln in einer Wicklung realisiert werden.

Ein Aspekt der beschriebenen Ausführungsformen besteht darin, daß die Wicklung zumindest teilweise aus L-förmigen Formteilen (L-Formteilen) aufgebaut ist, wobei jeweils ein Schenkel des L-Formteils einen Nutstab und der andere Schenkel einen senkrecht dazu, im wesentlichen in Sehnenrichtung verlaufenden Verbindungsleiter bildet. Durch Verbinden des freien Endes des Nutstabs eines Formteils mit dem freien Ende des Verbindungsleiters eines andere Formteils entsteht eine zusammenhängende Wicklung, bei den bevorzugten Ausführungsformen eine aus wendelartigen Spulen aufgebaute Wicklung. Hierbei bilden zwei miteinander verbundene L-Formteile jeweils eine Windung einer Spule.

Die Nutstäbe weisen zwecks Erzielung eines möglichst hohen Füllfaktors einen an den Nutquerschnitt angepaßten Querschnitt auf, also z.B. bei rechteckförmigen Nuten einen rechteckigen Querschnitt, wobei die Breite im wesentlichen der Nutbreite entspricht. In eine Nut werden dann mehrere Nutstäbe übereinander eingesetzt. Die Verbindungsleiter haben beispielsweise ebenfalls einen rechteckigen Querschnitt, sind aber vorteilhaft flacher als die Nutstäbe, damit z.B. die zu überlappenden Spulen gehörenden Verbindungsleiter radial übereinander geschichtet aneinander vorbei geführt werden können.

Die Verbindung zwischen dem freien Ende eines Nutstabs (Nutstabende) und dem freie Ende eines Verbindungsleiters wird vorzugsweise dadurch hergestellt, daß eine abgeflachte Lasche am Nutstabende auf einen Verbindungsbereich am Verbindungsleiterende aufgesetzt und mit diesem verbunden wird. Vorteilhaft ist der Verbindungsbereich so flach ausgebildet, daß die Lasche und der Verbindungsbereich zusammen nicht dicker als der Verbindungsleiter im übrigen Bereich sind.

In anderen (nicht gezeigten) Ausführungsformen werden die Nutstäbe und Verbindungsleiter verschiedener Formteile nicht durch Laschen verbunden, sondern durch einen anders geformten Fortsatz des Nutstabs, der an entsprechender Stelle angesetzt oder in eine entsprechende Ausnehmung im Verbindungsleiter eingesetzt wird.

Die Formteile werden an den Verbindungsstellen verlötet, oder durch Klemm- oder Steckverbindungen mechanisch miteinander verbunden und zusätzlich verlötet.

Nach einem weiteren Aspekt der beschriebenen Ausführungsformen läßt sich die gesamte Wicklung aus nur wenigen verschiedenen Formteiltypen aufbauen. Gemäß einer Ausführungsform werden für den Aufbau der Wicklung - eventuell abgesehen von der Verschalung der Spulen - nur zwei verschiedene Typen von L-Formteilen benötigt, deren Verbindungsleiterschenkel flacher als die Nutstabschenkel ausgebildet sind. Ein erster Typ ist dazu ausgebildet, eine Verbindung in ein und derselben Wicklungslage zu bilden, während ein zweiter Typ dazu ausgebildet ist, eine Überführung von einer Wicklungslage in die nächste zu bilden. In einer bevorzugten Ausführungsform ist am Ende jedes Nutstabschenkels eine abgeflachte Lasche angeordnet, wobei bei dem einen Typ von L-förmigen Formteil die abgeflachte Lasche und der flachere Schenkel beide auf der Höhe der Unterseite des Nutstabschenkels liegen, während bei dem anderen Typ von L-förmigen Formteil die abgeflachte Lasche auf der Höhe der Oberseite des Nutstabschenkels liegt und der flachere Schenkel auf der Höhe der Unterseite des Nutstabschenkels. Hierbei stellt ein Formteil von Typ 1 eine Hälfte einer Spulenwindung dar. Durch ein daran angeschlossenes Formteil vom Typ 2 wird die Windung vervollständigt und die Wicklung durch den Verbindungsleiter dieses Formteils in die nächste Wicklungslage überführt. Indem abwechselnd Formteile vom Typ 1 mit Formteilen vom Typ 2 verbunden werden, entsteht eine wendelartige Spule.

Nach einer anderen Ausführungsform wird zum Aufbau der Wicklung sogar nur ein einziger Formteiltyp benötigt. Und zwar könne Spulen auch ausschließlich aus L-Formteilen z.B. von Typ 2 aufgebaut werden, sofern die Nuten groß genug ausgebildet sind, um ausreichend Luft in Richtung der Nuttiefe für die Verbindungsstellen zwischen den Formteilen zu lassen. Alternativ kann auch jede zweite Nut radial zu den anderen Nuten versetzt werden, um den Aufbau der Wicklung aus L-Formteilen eines einzigen Typs zu ermöglichen.

Zum Verschalten der so erhaltenen Wicklung werden ggf. weitere Formteiltypen verwendet. Beispielsweise ist ggf. ein weiterer Formteiltyp zur Verbindung von zwei hintereinandergeschalteten Spulen vorgesehen. Bevorzugt ist dieses Formteil U-förmig ausgebildet und wird von zwei Nutstabschenkeln und einem Verbindungsleiterabschnitt gebildet, der flacher als die Nutstabschenkel ausgebildet ist. Zum Anschließen einer Spule an eine Stromzuführung wird ggf. ein weiterer Formteiltyp verwendet. In einigen Ausführungsformen handelt es sich hierbei um einen weiteren Typ eines L-förmigen Formteils, dessen Verbindungsleiterschenkel flacher als der Nutstabschenkel ausgebildet ist, wobei am Ende des Nutstabschenkels eine verlängerte abgeflachte Lasche zum Verbinden mit einer Stromschiene angeordnet ist. In anderen Ausführungsformen sind derartige Laschen an den Stromschienen selbst angeordnet, so daß zum Anschließen der Wicklung ein Standardformteil vom Typ 1 oder 2 verwendet werden kann.

Bei der bevorzugten Ausführungsform des Herstellungsverfahrens werden L-Formteile axial von den Stirnseiten in die Nuten des Ständerkörpers eingesetzt. Dies hat den Vorteil, daß die Nuten an ihrem Nutkopf durch Polschuhe o.ä. verengt sein können und so der effektive Luftspalt verringert wird. Nach dem Einsetzten werden die Formteile an ihrem Nutstabende jeweils mit dem Verbindungsleiterschenkel eines von der gegenüberliegenden Stirnseite eingesetzten Formteils verbunden.

Im beschriebenen Verfahren werden die Formteile lagenweise eingesetzt und miteinander verbunden. Hierbei wird die am Nutboden liegende Wicklungslage zuerst eingesetzt und die weiteren Wicklungslagen in der Reihenfolge von radial außen nach innen eingesetzt. Die abgeflachten Laschen der Nutstäbe werden hierbei von oben, d.h. radial von innen auf die entsprechenden Verbindungsbereiche aufgesetzt, so daß die Verbindungsstellen von dieser Seite zum Verbinden zugänglich sind. Die Wicklungsmontage kann selbstverständlich auch in umgekehrter Richtung, also von innen nach außen erfolgen.

Im Detail wird in einem Schritt a von einer Stirnseite des Ständers in mehrere Nuten - z.B. in jede zweite Nut - je ein Nutstabschenkel eines L-förmigen Formteils eingesetzt. Hierbei können die Nutstäbe der Formteile in der gleichen Wicklungslage zu liegen kommen. Die - noch nicht von anderen Formteilen verdeckten - Nutstabenden der in Schritt (a) eingesetzten Formteile werden in Schritt (b) auf der gegenüberliegenden zweiten Stirnseite mit den Verbindungsleiterschenkeln der vorher eingesetzten Formteile oder mit Stromschienen verbunden. In die in Schritt (a) übriggebliebenen Nuten wird nun von der zweiten Stirnseite je ein Nutstabschenkel eines L-Formteils eingesetzt (Schritt c), wodurch die in Schritt b hergestellten Verbindungsstellen verdeckt werden.. In Schritt (d) werden die Nutstabenden der in Schritt (c) eingesetzten Formteile auf der ersten Stirnseite mit den Verbindungsleiterschenkeln von darunter liegenden Formteilen verbunden. Diese Schritte werden wiederholt, bis die Nuten bis zum Nutkopf fast oder ganz mit Nutstäben gefüllt sind. Anschließend werden ggf. Formteile eingesetzt, die aufgrund ihrer Geometrie zum Verschalten der Wicklung geeignet sind. Beispielsweise werden ggf. U-förmige Formeile eingesetzt, durch die jeweils zwei wendelförmige Spulen in Reihe geschaltet werden, oder ein Verbindungsstück zum Anschließen der Wicklung an eine Stromschiene.

Nach einem weiteren Aspekt der bevorzugten Ausführungsformen sind die Verbindungsleiter von überlappenden Spulen mit wenigstens einer vollständigen Windung ineinander verschränkt angeordnet. Hierbei sind die Verbindungsleiter in Lagen angeordnet und vorzugsweise flacher als die Nutstäbe ausgebildet, beispielsweise so flach, daß die zu einer Wicklungslage gehörende Lage von Verbindungsleitern der verschiedenen überlappenden Spulen nicht dicker als ein Nutstab ist. Werden mehrere derartige Lagen von ineinander verschränkten Verbindungsleitern übereinander gesetzt, so können Spulen mit beliebiger Windungszahl aufgebaut werden. Auch in der Wicklung der DE 197 36 645 A1 sind die Verbindungsleiter flacher als die Nutstäbe. Hier sind die Verbindungsleiter überlappender Spulen aber an den Stirnseiten nicht ineinander verschränkt angeordnet, sondern jeweils zu Wickelköpfen gebündelt. Um das jeweilige Bündel zu erreichen, ist jeder Verbindungsleiter gegenüber dem mit diesem verbundenen Nutstab in Richtung der Nuttiefe versetzt (gekröpft), was Nachteile mit sich bringt (viele verschiedene Formteile, Platzbedarf für die Versetzung). Bei verschränkter Anordnung der Verbindungsleiter entfällt hingegen die Notwendigkeit, die Verbindungsleiter gegenüber den Nutstäben zu versetzen, so daß der Platzbedarf der Wickelköpfe geringer ist.

Um die abgeflachten Verbindungsleiter überlappender Spulen in verschränkter Anordnung ohne Kröpfung aneinander vorbei zu führen, sind sie an den Stirnseiten des Ständers zum Beispiel schräg zur Verbindungslinie zwischen den beiden Nuten geführt, deren Nutstäbe sie verbinden. Mit Verbindungslinie ist hierbei die Senkrechte auf die Winkelhalbierende des durch die beiden Nuten definierten Sektors des Ständers gemeint. Die Verbindungslinie hat also für jedes Nutenpaar eine andere Richtung. Durch diese schräge Führung werden die Verbindungsleiter einer Wicklungslage schuppenartig übereinander geschichtet.

In den dargestellten Beispielen ist eine Wicklung mit ineinander verschränkten Verbindungsleitern aus L-förmigen Formteilen aufgebaut.

Um die Wicklung an den Stirnseiten möglichst raumsparend zu gestalten, wurde es als vorteilhaft erkannt, die Wicklung nach einem Wickelschema auszuführen, bei dem an den Stirnseiten jeweils möglichst wenige Wickelköpfe überlappend aneinander vorbei geführt werden. Als einfaches Beispiel sei eine Drehstromwicklung mit einer Nut pro Pol und Strang (Einlochwicklung) genannt: Hier verlaufen an den Stirnseiten jeweils nur zwei Wickelköpfe überlappend. Anders liegen die Verhältnisse z.B. bei Wicklungen mit mehreren Nuten pro Pol und Strang (Mehrlochwicklungen), welche verwendet werden, um gegenüber Einlochwicklungen einen günstigeren Feldverlauf zu erzielen, der besser an eine Sinusform angeglichen ist. Wie aus dem in "Fachkunde Elektrotechnik" auf S. 331 gezeigten Wickelschema für eine Drehstrom-Zweilochwicklung hervorgeht, verlaufen hierbei z.B. jeweils 4 Wickelköpfe an den Stirnseiten überlappend. Selbst bei einer platzsparenden Verschränkung der Verbindungsleiter würden sich hierdurch weiter ausladende Wickelköpfe ergeben, da die Verbindungsleiter als Ausgleich für ihre um den Faktor 4 geringe Dicke i.a. breiter auszubilden wären, um ungefähr die gleiche Leiterquerschnittsfläche wie die Nutstäbe zu erreichen.

Um die Anzahl der jeweils aneinander vorbeilaufenden Wickelköpfe bei Mehrlochwicklungen zu reduzieren, ist die Wicklung bei den beschriebenen Ausführungsformen daher gesehnt ausgeführt. Bei einer gesehnten Wicklung ist die Spulenweite kleiner als die Polteilung. Unter Polteilung versteht man den in Nuten ausgedrückte Abstand zwischen zwei magnetischen Polen. Die Spulenweite gibt an, um wie viele Nuten von der ersten Spulenseite entfernt die zweite Spulenseite eingelegt wird. In den bevorzugten Ausführungsformen ist die Polteilung 6, die Spulenweite aber nur 5. Das bedeutet, daß die Wikkelköpfe der Spulen gegenüber einer ungesehnten Wicklung verkürzt sind, da sie nur 4 anstatt 5 Nuten überbrücken müssen. Insgesamt sind die an den Stirnseiten verlaufenden Abschnitte der Wicklung daher kürzer, und damit wird weniger Platz beansprucht und die ohmschen Verluste der Wicklung reduziert. Bei der gezeigten Drehstrom-Zweilochwicklung wird durch die Sehnung der Wicklung z.B. erreicht, daß an den Stirnseiten nur jeweils drei statt vier Wickelköpfe überlappend geführt werden. Die Wahl eines derartigen gesehnten Wickelschemas ist besonders für Formteilwicklungen vorteilhaft im Sinne der Erzielung eines kompakten Wickelkopfbereichs, ist aber bei Wicklungen aus Drahtgebilden mit entsprechenden Vorteilen anwendbar.

Die in den Ausführungsbeispielen gezeigten Wicklungen weisen mehrere wendelartige Spulen auf, wobei jeweils zwei Spulen derart in Reihe geschaltet sind, daß der Strom in einer der Spulen durch die Wendel in Richtung Nutkopf fließt, und in der anderen in Richtung Nutboden. Bei den Spulen sind die Verbindungsleiter flacher als die Nutstäbe ausgebildet und an den Stirnseiten schräg zur Verbindungslinie zwischen den beiden Nuten übereinander geschichtet, deren Nutstäbe sie verbinden. Eine wendelförmige Spule wird dann z.B. dadurch gebildet, daß die auf einer Stirnseite gelegenen Verbindungsleiter Nutstäbe der gleichen Lage verbinden und die auf der anderen Stirnseite gelegenen Verbindungsleiter Nutstäbe aus radial übereinanderliegenden Lagen. Die Wicklung ist aus L-Formteilen hergestellt.

Durch die gezeigte Hintereinanderschaltung zweier wendelartiger Spulen wird erreicht, daß die Anschlüsse an die Stromschienen entweder am Nutboden oder am Nutkopf angeordnet sind, also beide auf der gleichen Seite der Verbindungsleiter. Dies ist insbesondere dann von Vorteil, wenn auch das Stromschienenpaket auf dieser Seite der Verbindungsleiter angeordnet ist. Bei (nicht in Reihe geschalteten) Einzelspulen müßte dann hingegen ein Anschlußstück quer über die Verbindungsleiter vom Nutkopf zum Nutboden geführt werden, welches Platzbedarf in Axialrichtung hätte. Bei der Serienschaltung kann aber ein Verbindungsstück, das die beiden Spulen in Reihe schaltet, parallel zu den Verbindungsleitern laufen und kann somit platzsparend in Radialrichtung über den Verbindungsleitern geschichtet sein. Das Verbindungsstück kann z.B. das Mittelstück eines U-förmigen Formteils sein.

Die in den Ausführungsbeispielen verwendeten Formteile sind bevorzugt durch Ur- oder Umformtechnik, spanlos oder spanend hergestellt, beispielsweise durch Gießen, Fließpressen, Sintern, Prägen, Stanzen, Fräsen und Biegen oder durch Kombinationen dieser Fertigungstechniken. Beispielsweise werden die Formteile aus einem Blech von der Dicke der Nutstäbe ausgestanzt, die Dicke der Stanzteile im Bereich der Verbindungsleiter und der abgeflachten Laschen durch Massivprägen reduziert, und zuletzt das beim Prägen verdrängte Material abgeschnitten.

Alternativ kann ein Formteil auch aus Halbzeugen hergestellt werden, die z.B. durch Widerstandschweißen zusammengefügt werden. Bei einer bevorzugten Ausführungsform wird beispielsweise ein L-förmiges Formteil aus zwei stabförmigen, sog. I-Formteilen mit unterschiedlicher Querschnittsform hergestellt, so daß ein I-Formteil den Verbindungsleiterschenkel und ein anderes I-Formteil den Nutstabschenkel bildet. Der Nutstabschenkel kann z.B. von einem Stück Vierkantdraht gebildet sein, während für den Verbindungsleiter z.B. ein Flachdraht oder ein ausgestanztes Flachteil verwendet wird. Die I-Formteile lassen sich aufgrund ihrer einfachen Form mit wenig Verschnitt herstellen.

In einer weiteren Ausführungsform sind die Formteile aus mehreren Schichten aufgebaut. Hierbei wird z.B. auf ein flaches, L-förmiges Formteil im Bereich des Nutstabs ein stabförmiger Baustein aufgesetzt, um den Nutstabbereich zu verdicken. Mehrere Schichten können z.B. aufeinanderpaketiert werden. In einer weiteren Ausführungsform wird ein ähnliches Ergebnis erzielt, indem flaches Ausgangsmaterial derart gefaltet wird, daß im Nutstabbereich die gewünschte Dicke erhalten wird.

Die Formteile enthalten leitfähiges Material wie Kupfer oder Aluminium oder Legierungen dieser Metalle und sind gegeneinander isoliert.

Zum Anschließen der beschriebenen Wicklungen an eine Stromquelle werden bevorzugt umlaufende Stromschienen verwendet, entlang derer mehrere parallelgeschaltete Spulen oder Spulengruppen angeschlossen sind. Diese sind bevorzugt in regelmäßigen, durch das Wickelschema vorgegebenen, Abständen entlang des Umfangs der Stromschiene angeschlossen. Die Spulenenden werden also nicht über Verbindungsstücke mit zentralen Anschlußpunkten verbunden, sondern können ggf. direkt mit den Stromschienen verbunden werden.

Die gezeigten Ausführungsformen der Wicklung zeichnen sich durch einen kompakten Wickelkopfbereich aus. Insbesondere sind die Verbindungsleiter so flach ausgebildet und derart angeordnet, daß die Wickelköpfe an den Stirnseiten in Radialrichtung nicht mehr Platz in Anspruch nehmen, als durch die Nuttiefe gegeben ist. Es bleibt also die stirnseitige Fläche des Ständerkörpers unterhalb der Nuten frei. Anders ausgedrückt handelt es sich um die Fläche am Rücken des Ständers, welcher der Rückführung des magnetischen Flusses dient. Dieser Platz steht zum Verschalten der Spulen zur Verfügung. Durch Anordnung der Stromschienen oder anderer Bauteile zum Verschalten der Wicklung an dieser Stelle kann der Raum zumindest an einer Stirnfläche des Ständerkörpers vollständig ausgefüllt und so die Ausdehnung des magnetisch nicht aktiven Raums des Ständers in Axialrichtung minimiert werden. Zudem sind so die Stromschienen in unmittelbarer Nähe der Spulen angeordnet. Die Stromschienen zum Anschluß der Wicklung sind daher bevorzugt in Richtung der Nuttiefe unterhalb der Verbindungsleiter angeordnet.

In einer ersten Ausführungsform sind mehrere oder alle Stromschienen in der Längsrichtung der Nuten, also z.B. in Axialrichtung, nebeneinander geschichtet, so daß sie bevorzugt direkt an die Wickelköpfe angrenzen und dadurch auf kurzem Wege direkt mit der Wicklung verbunden werden können. Bevorzugt weist mindestens eine Stromschiene an der den Verbindungsleitern zugewandten Seite Erhöhungen auf, mit denen Spulenenden verbunden sind. Gemäß einer anderen Ausführungsform sind hingegen mehrere oder alle Stromschienen in Richtung der Nuttiefe übereinander geschichtet. In beiden Alternativen weist bevorzugt mindestens eine Stromschiene auf der den Verbindungsleitern zugewandten Seite Laschen auf, die sich über die anderen Stromschienen erstrecken und mit denen jeweils ein Spulenende verbunden ist.

Bei manchen Ausführungsformen, bei denen jeweils vier Spulen in Reihe geschaltet sind, bilden die Verbindungsstücke zwischen jeweils zwei und zwei in Reihe geschalteten Spulen eine weitere Stromschiene aus mehreren voneinander isolierten Sektoren.

Die Ausrüstung mit umlaufenden Stromschienen ist im übrigen allgemein bei jeder Art von Wicklung für eine elektrische Maschine mit parallelgeschalteten Spulen vorteilhaft. Die vorliegende Beschreibung offenbart damit auch einen Wicklungsaufbau für eine elektrische Maschine mit einer mehrphasige Wicklung, wobei mehrere parallelgeschaltete Spulen oder Spulengruppen der Wicklung an einer umlaufenden Stromschiene angeschlossen sind.

Insgesamt wird bei den beschriebenen Ausführungsformen der Platz an den Stirnflächen eines Ständerkörpers raumsparend ausgenutzt, wodurch insbesondere eine geringe axiale Ausdehnung des magnetisch nicht aktiven Volumens des Ständers erreicht wird. Die bevorzugte Formteilwicklung hat zudem einen hohen Füllfaktor, so daß eine hohe Drehmomentdichte erzielt wird. Die bevorzugten Ausführungsformen eignen sich daher insbesondere zur Verwendung bei einem Kurbelwellen-Starter-Generator für ein Kraftfahrzeug. Hierbei handelt es sich um eine als Starter- und Generator fungierende elektrische Maschine, die konzentrisch auf der Kurbelwelle eines Verbrennungsmotors sitzt und vorzugsweise ohne Zwischenübersetzung drehfest mit dieser Welle verbunden ist. Aufgrund des begrenzten Einbauraums ist die axiale Ausdehnungsmöglichkeit eines Starter-Generators gering, andererseits sind für den Direktstart hohe Drehmomente erforderlich.

Nun zurückkommend auf die Figuren 1-4, sind dort die für den Aufbau der bevorzugten Wicklung verwendeten Formteiltypen einzeln vorgestellt und erläutert.

Fig. 1 zeigt eine perspektivische Ansicht eines L-Formteils 1 vom ersten Typ. Ein Schenkel 8a des L-Formteils 1 bildet in der fertigen Wicklung einen Nutstab 8, während der andere Schenkel 6a an der Stirnseite des Ständers liegt und in verschiedenen Nuten liegende Nutstäbe 8 miteinander verbindet. Im folgen haben Nutstäbe bzw. Verbindungsleiter allgemein die Bezugszeichen 8 bzw. 6, während die zu bestimmten Formteiltypen gehörenden Nutstabschenkel und Verbindungsleiterschenkel mit 8a, 8b bzw 6a, 6b bezeichnet werden.

Die Verbindungsleiter 6 sind flacher und breiter ausgebildet als die Nutstäbe 8, wie aus den in Fig. 1 b dargestellten Querschnittansichten der beiden Schenkel 6a und 8a ersichtlich ist. Und zwar weisen die Nutstäbe 8 eine Dikke H und eine Breite B auf, wobei die Breite B in dem gezeigten Ausführungsbeispiel so gewählt ist, daß der Nutstab in der Breite jeweils eine Nut ausfüllt. Möglich sind aber auch Ausführungsformen, bei denen in einer Nut mehrere Nutstäbe nebeneinander, d.h. in gleicher Höhe vom Nutboden, zu liegen kommen. Die Dicke h des Verbindungsleiters 6 beträgt beispielsweise ein Drittel der Dicke H des Nutstabs 8, während die Breite b etwa dreimal so groß ist wie die Breite B des Nutstabs 8. Der Leiterquerschnitt ist also in beiden Schenkeln des gezeigten Formteils in etwa gleich.

Das Formteil 1 weist am freien Ende des Nutstabs 8a eine abgeflachte Lasche 10a auf. Bei dem in Figur 1 gezeigten ersten Typ liegt die Lasche 10a auf gleicher Höhe wie der Verbindungsleiter 6a, nämlich auf der in der Zeichnung unten liegenden Seite des Nutstabschenkels 8a. Die (nicht sichtbaren) Unterseiten des Nutstabs 8a, des Verbindungsleiters 6a und eines nahe zum Nutstab 8a liegenden Übergangsbereiches 12 der Lasche 10a liegen also in einer Ebene. Der Übergangsbereich 12 der Lasche 10a weist etwa die gleiche Dicke auf wie der Verbindungsleiter 6a, also ca. ein Drittel der Dicke des Nutstabs. Am äußersten Ende der Lasche 10a befindet sich ein Verbindungsbereich 13, der gegenüber dem Übergangsbereich 12 noch weiter abgeflacht ist, nämlich auf etwa ein Sechstel der Dicke des Nutstabs. Der Übergang zwischen den Bereichen 12 und 13 erfolgt durch eine Stufe auf der Unterseite der Lasche 10a. Der Verbindungsbereich 13 läßt also auf der Unterseite gegenüber der Höhe der Unterseite des Nutstabs 8a einen Raum in Höhe etwa eines Sechstels der Nutstabdicke frei.

Zum Verbinden zweier Formteile wird der Verbindungsbereich 13 der Lasche 10a auf das Ende des Verbindungsleiters eines zweiten Formteils aufgesetzt und mit diesem verbunden. Der Verbindungsbereich 13 der Lasche 10a ist daher - ebenso wie ein Verbindungsbereich 16 am Ende des Verbindungsleiters 6 - nicht mit einer isolierenden Schicht versehen, was in der Zeichnung durch eine Schraffur gekennzeichnet ist. An den nicht schraffierten Flächen ist Formteil 1, ebenso wie die anderen gezeigten Formteile, isolierend beschichtet. Damit die Verbindungsstelle zwischen zwei Formteilen, die im dicht gepackten Wickelkopfbereich liegt, nicht dicker als ein Verbindungsleiter 6 ist, ist der Verbindungsbereich 16 des Verbindungsleiters 6a auf etwa die Hälfte der Dicke des Verbindungsleiters 6a abgeflacht. Dadurch kann der Laschen-Verbindungsbereich 13 auf einen Verbindungsbereich 16 aufgelegt und verbunden werden, ohne daß die Dicke des Verbindungsleiters 6 an der Verbindungsstelle überschritten wird. Da der möglichst kurz gehaltene Übergangsbereich 12 und die Verbindung selbst nur etwa ein Drittel der Höhe des Nutstabs 8a aufweisen, liegt dort eine Querschnittsverengung vor, die zugunsten einer dicht gepackten Wickelkopfanordnung der Verbindungsleiter in Kauf genommen wird. Der Übergangsbereich 12 kann vorteilhaft sein, indem er einen Abstand zwischen Nutstäben und Wickelkopfbereich schafft. Er sollte einen möglichst großen Leiterquerschnitt aufweisen. Der Übergangsbereich 12 kann auch als stufenloser Übergang zwischen Nutstab und Verbindungsbereich 13 ausgebildet sein. Bei anderen Ausführungsformen ist der Übergangsbereich 12 weggelassen, dort schließt der Verbindungsbereich 13 direkt an den Nutstab 8 an.

Fig. 2 zeigt einen zweiten Typ eines L-förmigen Formteils 2, welcher zusammen mit dem ersten Typ zur Bildung einer vollständigen Windung einer wendelförmigen Spule verwendet wird. Das Formteil 2 ist im wesentlichen gleich aufgebaut wie das Formteil 1, insbesondere sind die Längen und die Querschnitte B-B und A-A der Verbindungsleiter 6a, 6b und Nutstäbe 8a, 8b der beiden Formteile gleich. Auch bei Formteil 2 ist am freien Ende des Nutstabs 8b eine abgeflachte Lasche 10b angeordnet. Im Gegensatz zur Lasche 10a von Formteil 1 ist die abgeflachte Lasche 10b aber nicht auf gleicher Höhe wie der Verbindungsleiter 6b angeordnet, sondern ist zu der gegenüberliegenden Fläche des Nutstabs 8a versetzt. Und zwar ist die Lasche 10b des Formteils 2 auf der Höhe der (in Fig. 2 oben liegenden) Seite des Nutstabs 8b angeordnet, während der Verbindungsleiter 6b - wie bei Formteil 1 - auf der Höhe der Unterseite des Nutstabs 8b angeordnet ist. Ansonsten ist die Lasche 10b des Formteils 2 gleich ausgebildet wie die Lasche 10a des Formteils 1: Sie weist einen Übergangsbereich 12 auf, der sich direkt an den Nutstab 8b anschließt und etwa so flach wie der Verbindungsleiter 6b ist, und einen noch weiter abgeflachten Verbindungsbereich 13 am äußersten Ende der Lasche 11. Dieser Bereich 13 ist wiederum so flach ausgebildet, daß seine Dicke zusammen mit der Dicke des abgeflachten Verbindungsbereichs 16 eines Verbindungsleiters 6 etwa der Dicke h eines Verbindungsleiters 6 entspricht. Die Stufe zwischen dem Übergangsbereich 12 und dem Verbindungsbereich 13 liegt auf der nach unten weisenden Seite der Lasche 10b, so daß beim zweiten Typ die obere Seite der gesamten Lasche 10b auf der gleichen Höhe wie die obere Seite des Nutstabs 8b liegt.

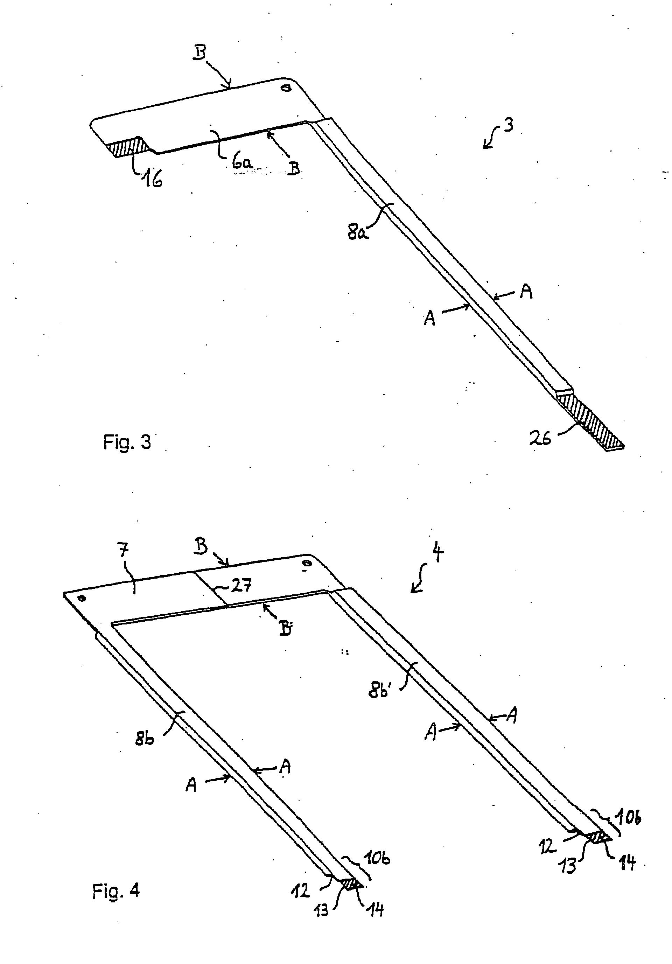

Fig. 3 zeigt einen dritten Typ eines L-förmigen Formteils 3, welches dazu dient, die Wicklung mit den Stromschienen zu verbinden. Formteil 3 gleicht im Prinzip Formteil 1, weist aber anstatt der Lasche 10a eine verlängerte Lasche 26 auf, welche mit einer Stromschiene verbunden, wird und daher keine Isolierung aufweist. Die Lasche 26 hat vorzugsweise die gleiche Dicke h wie ein Verbindungsleiter 6. Die Formteile 3 liegen vorteilhaft in der untersten Wicklungslage der Nuten, so daß die verlängerten Laschen 26 ggf. direkt an die unter den Nuten angeordneten Stromschienen angrenzen. Alternativ können die Formteile 3 auch in der obersten Wicklungslage liegen.

In einer anderen bevorzugten Ausführungsform sind die Laschen zum Anschließen der Wicklung an die Stromschienen auf den Stromschienen selbst angeordnet. Es werden dann keine speziell ausgebildeten Formteile 3 vom dritten Typ benötigt, sondern es werden z.B. die Formteile 1 vom ersten Typ mit ihren Laschen 10a auf die verlängerten Laschen 26 der Stromschienen aufgeschweißt.

Fig. 4 zeigt schließlich einen Typ eines U-förmigen Formteils, welcher verwendet wird, um zwei wendelförmige Spulen einer Wicklung in Reihe zu schalten. Das U-förmige Formteil 4 weist zwei Nutstabschenkel 8b, 8b' auf, welche in ihrer Länge und Querschnittform A-A mit den Nutstabschenkeln 8a, 8b der Formteile 1 und 2 übereinstimmen. Beide Nutstäbe 8b, 8b' weisen an ihrem freien Ende eine abgeflachte Lasche 10b auf, welche auf der Höhe der in der Zeichnung oben liegenden Seite des Nutstabs 8b bzw. 8b' angeordnet ist und somit der Lasche 10b des L-Formteils 2 entspricht. Der die beiden Nutstäbe 8b, 8b' verbindende Verbindungsleiter 7 weist die gleiche Querschnittform B-B auf wie die Verbindungsleiter 6a, 6b der Formteile 1 und 2, ist aber um einen Nutabstand länger als diese. Ist z.B. der Verbindungsleiter 6a, 6b der Formteile vom ersten und zweiten Typ so lang, das eine Spule mit in einem Abstand von 5 Nuten liegenden Nutstäben 8 aufgebaut werden kann, so ist der Verbindungsleiter 7 des U-Formteils zwecks Verbindung zweier Spulen länger ausgebildet, hier z.B. so, daß die beiden Nutstabschenkel 8b, 8b' in einem Abstand von 6 Nuten zueinander zu liegen kommen. Eine weitere Besonderheit des Verbindungsleiters 7 ist, daß er in Bezug zu den beiden Nutstabschenkeln 8b, 8b' nicht in ein- und derselben Ebene liegt. Vielmehr liegt er einerseits auf der Höhe der (in der Zeichnung) oberen Seite des einen Nutstabschenkels 8b, andererseits jedoch auf der Höhe der Unterseite des anderen Nutstabschenkels 8b'. Liegen in der fertigen Wicklung beide Nutstabschenkel 8b, 8b' des U-Formteils in der gleichen Wicklungslage, liegt er daher leicht schräg zu der Verbindungslinie zwischen den beiden Nuten mit den Nutstäben 8b, 8b'. Wie durch eine Naht 27 angedeutet, kann das U-förmige Formteil z. B. aus zwei L-förmigen Formteilen hergestellt sein, die am Ende ihrer Verbindungsleiterschenkel abgeflachte Bereiche aufweisen, welche aufeinandergelegt und miteinander verbunden werden.

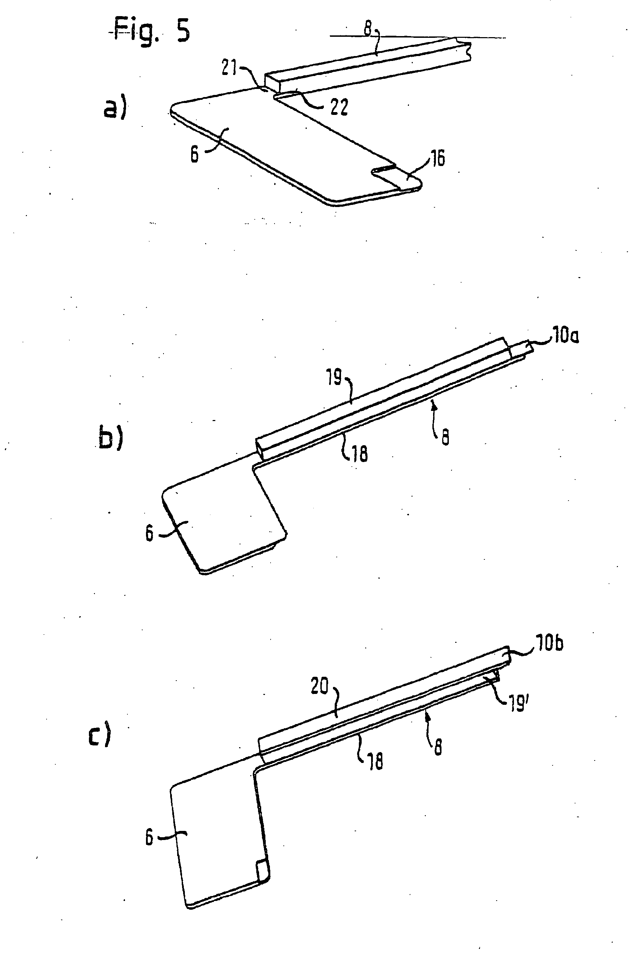

Fig. 5 zeigt verschiedene Möglichkeiten, ein L-Formteil nicht nur aus einem Stück aus dem Vollen, sondern aus mehreren Teilen herzustellen. Bei der in Fig. 5a gezeigten bevorzugten Ausführungsform wird ein L-Formteil z.B. aus zwei stabförmigen I-Formteilen zusammengesetzt. Die für Verbindungsleiter 6 und Nutstab 8 benötigten I-Formteile mit unterschiedlichen Längen und Querschnittsformen können z.B. jeweils aus einem Halbzeug gewonnen werden. Ein Nutstab 8 kann beispielsweise durch Abschneiden von einem Vierkantdraht mit passender Querschnittsform hergestellt werden. An einem (nicht gezeigten) Ende des Vierkantdrahts wird eine Lasche 10 eingeprägt und das verdrängte Material abgeschnitten. Das anderen Ende wird auf ähnliche Weise geprägt und beschnitten, um es mit einer Ausnehmung 22 zu versehen, in die ein Fortsatz 21 des Verbindungsleiters eingesetzt und mit dem Nutstab verbunden werden kann. Der Verbindungsleiter 6 wird bevorzugt aus einem Flachband ausgestanzt. An einer Ecke des Verbindungsleiters 6 wird ggf. ein abgeflachter Verbindungsbereich 16 eingeprägt und das verdrängte Material abgeschnitten. Bevorzugt werden Nutstab 8 und Verbindungsleiter 6 durch Widerstandsschweißen miteinander verbunden. Hierfür werden in den Fortsatz 21 vorzugsweise Schweißnoppen eingeprägt. Unter Umständen wird der Nutstab 8 an dem gezeigten Ende noch weiter abgeprägt, so daß dieses Nutstabende die gleiche Materialstärke aufweist wie der Fortsatz 21 des Verbindungsleiters 6. Beim Schweißen erweist sich die so erzeugte Symmetrie in der Materialstärke und Wärmeableitung vorteilhaft. Geeignete Verbindungstechniken, um bei der in Fig. 5a gezeigten Variante zwischen Verbindungsleiter 6 und Nutstab 8 eine elektrische Verbindung herzustellen, sind außerdem Schweißen (Laserschweißen), Löten oder Kleben mit leitendem Klebstoff, sowie form- oder kraftschlüssige Verbindungen.

Bei den in Fig. 5b und c dargestellten Varianten ist das L-Formteil aus mehreren Schichten aufgebaut. Das in Fig. 5b gezeigte Formteil ist z.B. aus einer flachen, L-förmigen Schicht 18 und einer nur im Nutstabbereich aufgesetzten zweiten Schicht 19 zusammengesetzt. Die unter der Schicht 19 hervorstehenden Bereiche der Schicht 18 bilden auf der einen Seite den Verbindungsleiter 6, auf der anderen Seite die Lasche 10a. Das Formteil ist also vom Typ 1. Um ein Formteil vom Typ 2 herzustellen, bei dem Lasche 10b und Verbindungsleiter 6 nicht auf der gleichen Ebene angeordnet sind, wird gemäß Fig. 5c noch eine weitere Schicht 20 aufgesetzt, die am Nutstabende über die Schicht 19 übersteht und somit eine Lasche 10b bildet. Die Schicht 19' in Fig. 5c ist entsprechend um die Dicke der Schicht 20 dünner als die Schicht 19 der Fig. 5b ausgebildet. Die aufeinandergesetzten Schichten werden vorzugsweise durch Löten, Schweißen (Ultraschall-, Laser- oder Widerstandschweißen), Toxen oder Stanzpaketieren miteinander verbunden.

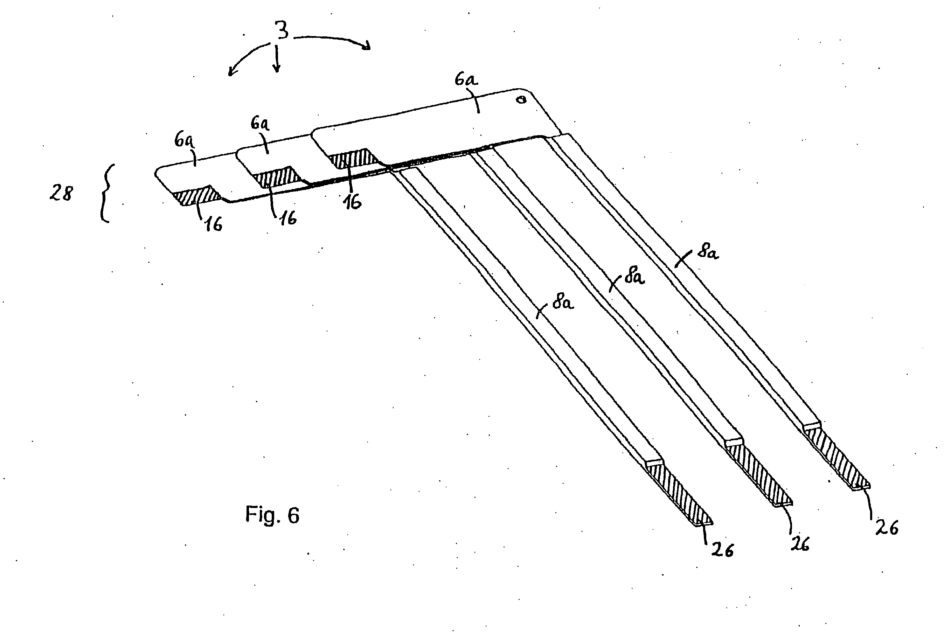

Anhand der Fig. 6 bis 8 soll nun der Aufbau einer Wicklung mit überlappenden Spulen aus L-Formteilen erläutert werden. In den Figuren wird hierzu der Aufbau der untersten Wicklungslage mit wenigen Formteilen demonstriert. Die Formteile sind der Einfachheit halber ohne Ständerkörper und auf einer ebenen Fläche liegend dargestellt; in einem Ständerkörper einer Radialfeldmaschine wären die Formteile auf der Innenmantelfläche eines Zylinders angeordnet. Fig. 6 zeigt drei L-förmige Formteile vom Typ 3 mit verlängerten Laschen. Die Formteile 3 liegen in der in den Nuten zuunterst liegenden Wicklungslage und sind um je zwei Nutabstände zueinander versetzt angeordnet, so daß in jeder zweiten Nut der Nutstab 8a eines Formteils 3 zu liegen kommt. Die verlängerten Laschen 26 befinden sich alle an der gleichen Stirnseite des Ständerkörpers und sind dort mit darunter liegenden (nicht dargestellten) Stromschienen verbunden. Auf der anderen Stirnseite des Ständerkörpers sind die Verbindungsleiter 6 schuppenartig übereinandergeschichtet und bilden so eine Lage 28 von Verbindungsleitern. In der Verbindungsleiterlage 28 sind die Verbindungsleiter 6 derart geschichtet, daß sie mit ihrem freien Ende stets oben in der Lage liegen und der Verbindungsbereich 16 frei zugänglich ist, während das andere Ende durch andere Verbindungsleiter 6a verdeckt ist. Der Übergang zwischen Verbindungsleiter 6a und Nutstab 8a des gleichen L-Formteils 3 liegt in dem verdeckten Bereich.

In der Verbindungsleiterlage 28 liegen, wie aus der Zeichnung ersichtlich ist, maximal drei Verbindungsleiter 6a übereinander. Da die Dicke h der Verbindungsleiter 6a in dem gezeigten Ausführungsbeispiel ca. ein Drittel der Dicke H der Nutstäbe 8a beträgt, ist die Verbindungsleiterlage 28 also an keiner Stelle höher als die dazugehörige Lage von Nutstäben 8a.

Im gezeigten Beispiel verbinden die Verbindungsleiter 6a jeweils Nutstäbe im Abstand von fünf Nuten, wie nachfolgend noch erläutert wird. In anderen, nicht gezeigten Ausführungsbeispielen verbinden die Verbindungsleiter Nutstäbe in größerem oder kleinerem Abstand zueinander, so daß auch in der Verbindungsleiterlage jeweils mehr oder weniger als drei Verbindungsleiter übereinander liegen. Bei diesen Wicklungen wird die Dicke h der Verbindungsleiter 6 vorteilhaft so gewählt, daß die Dicke einer Verbindungsleiterlage 28 jeweils der Dicke H eines Nutstabs 8 entspricht. Bei anderen Ausführungsformen, die zum Anschluß an die Stromschienen keinen speziellen Formteiltyp vorsehen, wird bei den ersten Herstellungsschritten gemäß Fig. 6 der erste Formteiltyp verwendet.

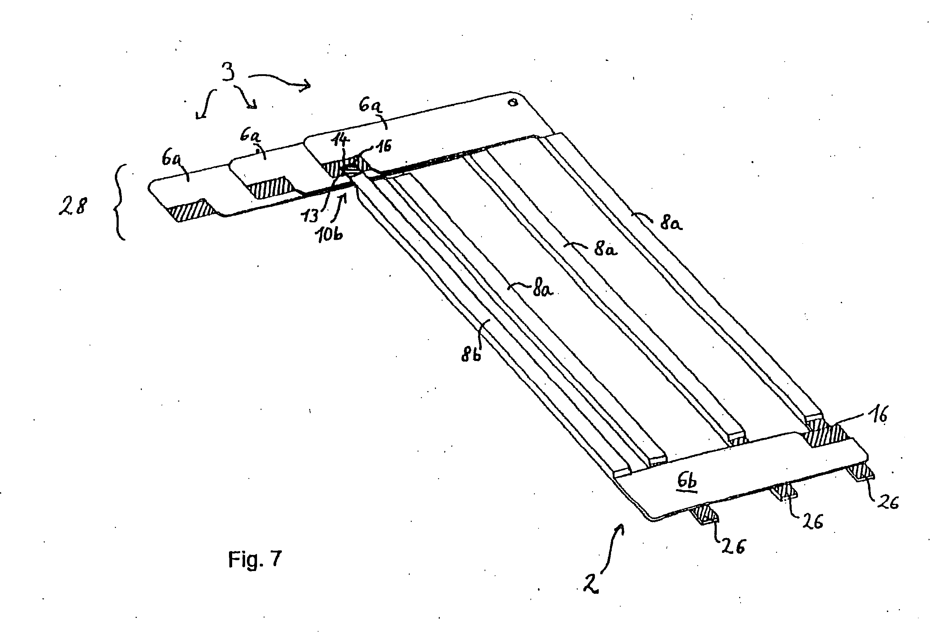

Ist in jede zweite Nut entsprechend Fig. 6 ein Formteil 3 eingelegt, wird in die übrigen Nuten je ein Formteil vom zweiten Typ derart eingesetzt, daß sein Verbindungsleiter 6b auf der den Verbindungsleitern 6a der bereits eingesetzten Formteile 3 gegenüberliegenden Stirnseite des Ständerkörpers angeordnet ist (siehe Fig. 7). Der Verbindungsbereich 13 der abgeflachten Lasche 10b des Formteils 2 kommt hierbei auf dem abgeflachten Verbindungsbereich 16 des Verbindungsleiters 6a eines Formteils 3 zu liegen. Das Formteil 2 wird mit dem Formteil 3 an dieser Stelle verbunden.

Da der Endbereich 13 der Lasche 10b des Formteils 2 - wie im Zusammenhang mit Fig. 2 erläutert - auf der Höhe der Oberseite des Nutstabs 8b angeordnet ist, kommt der Nutstab 8b des Formteils 2 in der gleichen Wicklungslage wie die Nutstäbe 8a der Formteile 3 zu liegen, wenn er auf den Verbindungsbereich 16 des Verbindungsleiters 6a aufgesetzt wird. Dadurch wird der Höhenversatz ausgeglichen, der aufgrund der schuppenartigen Schräglage der Verbindungsleiter 6a in der Verbindungsleiterlage 28 entstanden ist.

An der gegenüberliegenden Stirnseite liegt der Verbindungsleiter 6b des Formteils 2 ebenfalls schräg, und zwar an seinem nichtfreien Ende auf gleicher Höhe wie die verlängerten Laschen 26 der Formteile 3, beginnend von dort zu seinem freien Ende ist er aber über diese Laschen geschichtet.

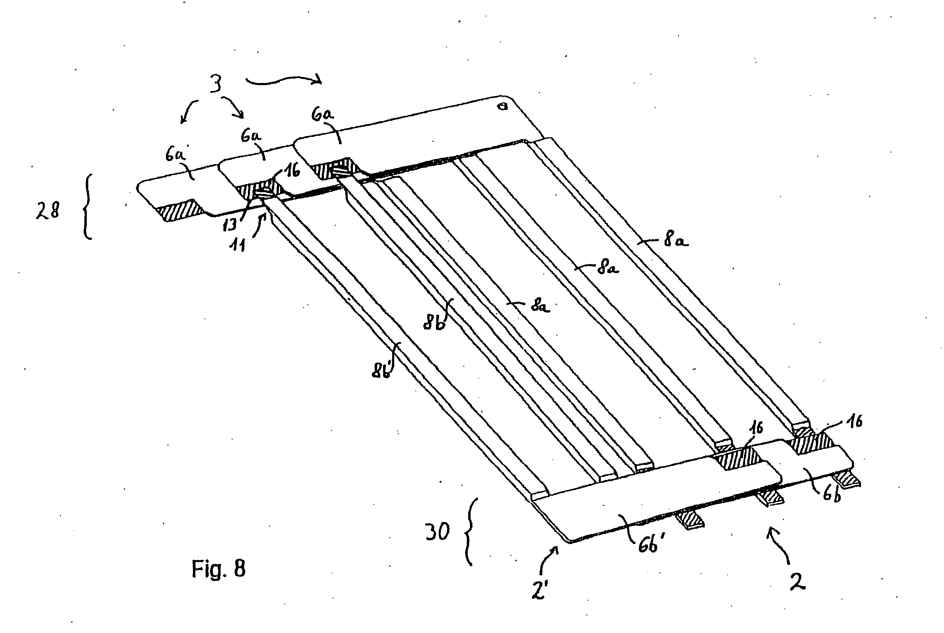

Fig. 8 zeigt die gleiche Wicklungsanordnung wie Fig. 7, bei der noch ein weiteres Formteil 2' entsprechend dem Formteil 2 eingesetzt wurde. Das Formteil 2' ist auf gleiche Weise wie das Formteil 2 mit seinem Laschen-Endbereich 13 am Ende seines Nutstabschenkels 8b' mit dem Verbindungsbereich 16 eines Formteils 3 verbunden. Auf der gegenüberliegenden Stirnseite ist es mit seinem Verbindungsleiter 6b' schuppenartig über den Verbindungsleiter 6b des Formteils 2 geschichtet, so daß der Verbindungsbereich 16 über dem Nutstabende des Formteils 3 zu liegen kommt, mit dem der Laschen-Endbereich 13 des Formteils 2' verbunden ist.

Setzt man nach dem in Fig. 8 gezeigten Schema noch weitere Formteile 2 und 3 jeweils in jede zweite Nut ein, erhält man eine vollständige Wicklungslage von Nutstäben 8. Die Verbindungsleiter der Formteile 2 bzw. 2' bilden dann eine zweite Verbindungsleiterlage 30 ähnlich der Lage 28 auf der anderen Stirnseite. Die Verbindungsleiter 6a, 6b der Formteile 2, 3 liegen jeweils mit ihrem freien Ende in diesen Lagen oben, so daß ihre nicht isolierten Verbindungsstellen 16 nicht von anderen Verbindungsleitern der gleichen Lage verdeckt sind. Die Verbindungsleiterlagen 28 und 30 sind jeweils schräg geschichtet, und zwar so, daß die Verbindungsleiter 6b (in der Perspektive der Zeichnung) von links unten nach rechts oben, die Verbindungsleiter 6a von rechts unten nach links oben verlaufen.

Das Formteil 2 bildet zusammen mit dem zugehörigen Formteil 3 nach Verbindung eine vollständige Windung einer wendelförmigen Spule. Durch den schräg geschichteten Verbindungsleiter 6b des Formteils 2 wird die Wicklung in die nächsthöhere Wicklungslage überführt. Zum Fortsetzen der Wendel wird ein - in Fig. 8 nicht gezeigtes - Formteil 1 auf das zur ersten Windung gehörige Formteil 3 gelegt und somit eine neue Wicklungslage begonnen. Mit dem Verbindungsbereich 13 der Lasche 10a kommt das Formteil 1 somit auf der Verbindungsstelle 16 des entsprechenden Formteils 2 zu liegen und wird auf die vorstehend beschriebene Weise mit dieser verbunden. Da die Lasche 10a des Formteils 1 auf der Höhe der Unterseite des Nutstabs 8a des Formteils 1 liegt, wird der durch die schräge Schichtung in der Verbindungsleiterlage 30 geschaffene Höhenversatz an dieser Verbindungsstelle nicht ausgeglichen, sondern führt im Gegenteil dazu, daß eine Wendel entsteht. Zur Bildung einer vollständigen Wicklung werden auf sämtliche Formteile 3 Formteile vom Typ 1 gelegt und an entsprechenden Verbindungsstellen 16 der Formteile 2 wiederum verbunden. Um diese zweite Wicklungslage zu vervollständigen, werden in die übriggebliebenen Nuten, also in jede zweite Nut, weitere Formteile 2 auf die bereits eingesetzten Formteile 2 aufgesetzt und mit den Verbindungsstellen 16 der Formteile 1 verbunden. Die Verbindungsleiter der Formteile 1 bilden eine weitere Verbindungsleiterlage 28, die gleich aufgebaut ist wie die in Fig. 8 gezeigte Verbindungsleiterlage 28 der Formteile 3. Nach dem Einsetzen und Verbinden der zweiten Wicklungslage sind also mehrere überlappende Spulen mit jeweils zwei Windungen entstanden, deren Verbindungsleiter ineinander verschränkt angeordnet sind.

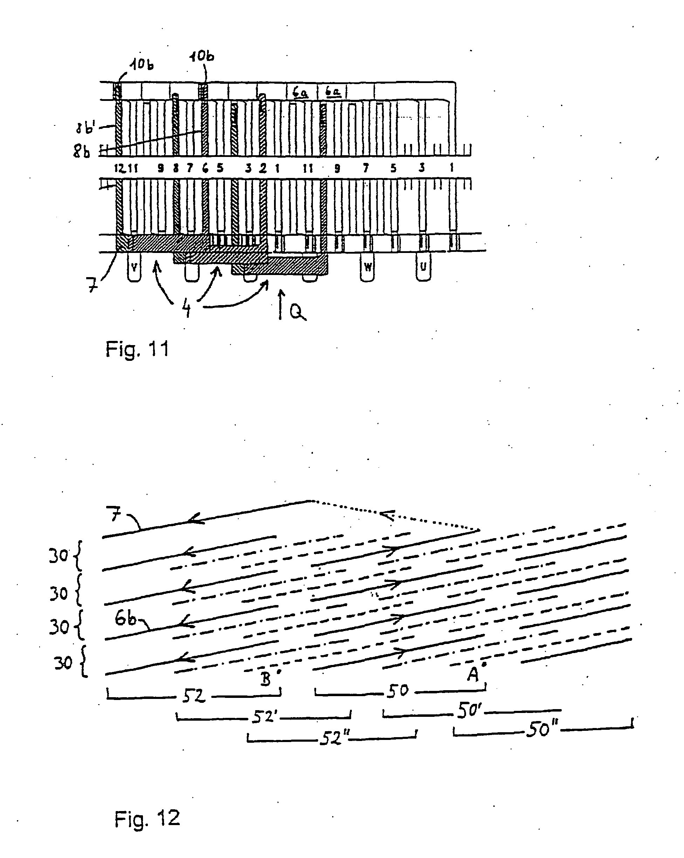

Die Verschränkung der Verbindungsleiter überlappender Spulen ist schematisch in Fig. 12 dargestellt. Diese zeigt eine schematische Draufsicht auf die Stirnseite eines bewickelten Ständers, wobei die Stirnfläche der Verbindungsleiter 6b vereinfacht als Linien dargestellt sind. Die Verbindungsleiter 6b sind hier in vier schräg geschichteten Lagen 30 übereinander angeordnet. Die Verbindungsleiter 6b der verschiedenen Stränge sind durch unterschiedliche Linienarten gekennzeichnet, z.B. die zu Strang V gehörenden Verbindungsleiter durch durchgezogene Linien, die zu Strang W gehörenden Verbindungsleiter 6b durch strichpunktierte Linien und die zu Strang U gehörenden Verbindungsleiter 6b durch gestrichelte Linien. Innerhalb einer Verbindungsleiterlage 30 wechseln sich die verschiedenen Stränge jeweils ab. Durch Übereinanderschichtung mehrerer gleicher Lagen und die entsprechenden Verbindungen zwischen den Formteilen dieser Lagen entstehen wendelförmige Spulen 50, 52, 50', 52', 50", 52", deren Verbindungsleiter ineinander verschränkt sind. Jeder Verbindungsleiter 6b einer Lage 30 gehört zu einer anderen Spule. Die Verbindungsleiter des Strang V gehören z.B. zu den Spulen 50, 52, die des Strang W zu den Spulen 50', 52' und die Verbindungsleiter des Strang U zu den Spulen 50", 52". Die Spule 52" überlappt auf einer Seite mit den Spulen 52, 52' und auf der anderen Seite mit den Spulen 50, 50'.

Auf der anderen Stirnseite sind die Verbindungsleiter 6a auf entsprechend Weise angeordnet, mit dem Unterschied, daß die Verbindungsleiter 6a der Lage 28 jeweils Nutstäbe der gleichen Wicklungslage verbinden, während die Verbindungsleiter 6b der Lage 30 jeweils Nutstäbe aus übereinanderliegenden Wicklungslagen verbinden, so daß nach jeder Windung ein Wechsel in die nächsthöhere Wicklungslage erfolgt.

Die Wickelköpfe von Drahtspulen können im Prinzip ineinander verschränkt angeordnet werden, anstatt sich gebündelt an den Stirnseiten auszuweichen. Obwohl Fig. 12 eine dreiphasige Zwei-Loch-Wicklung zeigt, kann selbstverständlich jede beliebige Wicklung einer Wechselstrom- oder Gleichstrommaschine derart ausgeführt werden, daß die Verbindungsleiter überlappender Spulen ineinander verschränkt sind.

Fig. 9 zeigt ebenso wie Fig. 6 bis 8 einen Teil der in den Nuten zuunterst liegenden Wicklungslage. Die Abbildung zeigt jedoch nicht mehr die Idealisierung einer ebenen Abwicklung, sondern einen Ausschnitt eines gekrümmten Ständerkörpers 32 einer Radialfeldmaschine in Innenläuferbauart (oder eines Läuferkörpers in Außenläuferbauart), in dessen Nuten 34 die Formteile 2,3 eingesetzt sind. Damit die eigentliche Wicklung besser sichtbar ist, sind nur die beiden Stirnseiten des Ständerkörpers 32 eingezeichnet. Der Ständerkörper 32 ist selbstverständlich massiv und typischerweise aus Elektroblechen hergestellt, die in Axialrichtung übereinandergeschichtet sind. Die dargestellten Stirnseiten des Ständerkörpers 32 entsprechen also jeweils etwa dem äußersten Blech des Blechpakets.

Die Formteile 2, 3 sind direkt über dem Nutboden in die Nuten 34 eingesetzt. Die Nuten 34 sind an ihrem Kopf 36 verengt, so daß die L-Formteile 2 und 3 nur in Axialrichtung in die Nuten einzuschieben sind. Von der dem Betrachter zugewandten Stirnseite ist bereits eine Lage von Formteilen 3 eingesetzt, von der gegenüberliegenden Stirnseite sind drei Formteile von Typ 2 eingesetzt.

In der gekrümmten Darstellung von Fig. 9 wird deutlich, daß die Verbindungsleiter 6 der L-Formteile leicht in Radialrichtung gebogen sind. Dies dient zum einen dazu, die Verbindungsleiter zu einer möglichst kompakten Verbindungsleiterlage 28 übereinanderzuschichten, zum anderen um der Umfangsrichtung des Ständerkörpers zu folgen. Die gezeigte Biegung der Verbindungsleiter kann beim Einsetzen der Formteile erfolgen. Möglich ist auch, die Formteile bereits mit einer entsprechenden Krümmung zu fertigen oder sie vor dem Einsetzen entsprechend zu biegen. In Fig. 9 ist ebenfalls ersichtlich, daß bei der gezeigten Radialfeldmaschine die Nuten im Ständerkörper vom Nutboden zum Nutkopf radial zusammenlaufen. Der Abstand zwischen zwei Nuten ist also am Nutkopf geringer als am Nutboden. In einer Wicklung, die aus den gezeigten L-Formteilen aufgebaut ist, kann diese Differenz leicht ausgeglichen werden, da der genaue Abstand zwischen zwei durch einen Verbindungsleiter 6a oder 6b verbundenen Nutstäben 8a, 8b nicht festgelegt ist. Vielmehr kann der Laschen-Verbindungsbereich 13 eines Nutstabs 8a oder 8b an beliebiger Stelle auf den mit einer ausreichenden Toleranzbreite ausgestalteten Verbindungsbereich 16 des Verbindungsleiter 6a oder 6b eines zweiten Formteils aufgelegt und mit diesem verbunden werden.

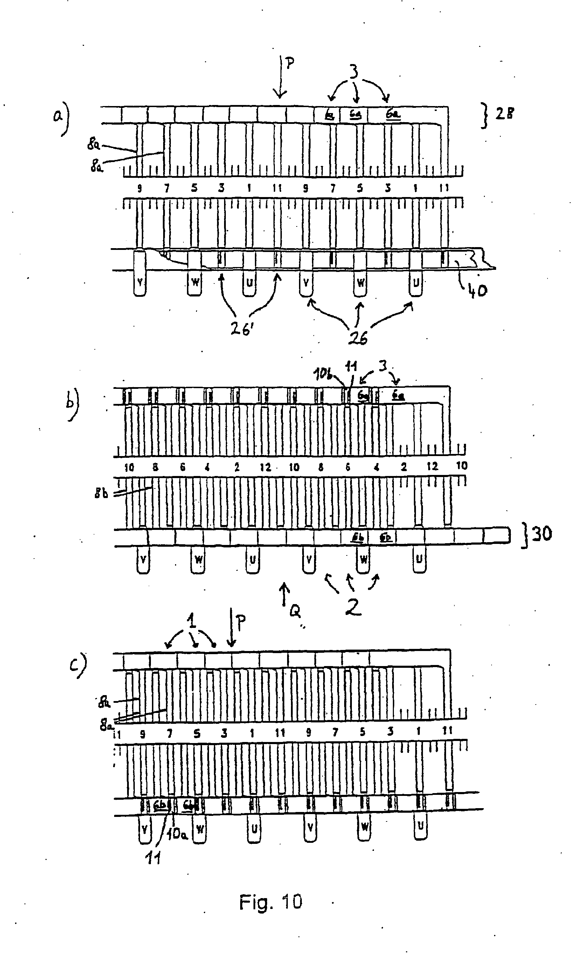

Anhand der Fig. 10a-c soll nun ein Ausführungsbeispiel des Verfahrens zur Herstellung einer Wicklung genauer erläutert werden. Die Figuren zeigen jeweils eine schematische Draufsicht auf die genutete Seite eines Ständeroder Läuferkörpers - man denke sich hierbei den Ständer- bzw. Läuferkörper wiederum aufgeschnitten und in eine Ebene abgewickelt. Die Verengung der Nuten am Nutkopf ist hier nicht dargestellt, so daß die in den Nuten zuoberst liegende Wicklungslage voll sichtbar ist. Die Nuten sind jeweils von 1 bis 12 durchnumeriert, da das in diesem Beispiel verwendete Wickelschema sich alle 12 Nuten wiederholt.

Fig. 10a zeigt den Ständer nach Beendigung des ersten Verfahrensschrittes, bei dem in jede zweite Nut 1, 3, 5, 7 usw. von der in der Zeichnung oben liegenden Stirnseite des Ständerkörpers ein Formteil 3 in der Richtung des Pfeils P eingesetzt wurde, und zwar derart, daß alle Verbindungsleiter 6 der Formteile (in der Zeichnung) nach links zeigen. Die Formteile 3 werden in die Nuten in der Reihenfolge von links nach rechts eingesetzt, damit sämtliche freien Enden der Verbindungsleiter 6 auch nach dem Einsetzen aller Formteile 3 dieser Lage noch radial zugänglich sind. Die Formteile 3 in den Nuten 1, 5 und 9 weisen jeweils am freien Ende des Nutstabs eine verlängerte abgeflachte Lasche 26 auf, die zum Verbinden der Wicklung mit einer der (nicht gezeigten) Stromschienen für die Phasen der Stromzuführung geeignet ist. Die Formteile in den Nuten 3, 7 und 11 weisen ebenfalls eine abgeflachte Lasche 26' auf, die in diesem Beispiel kürzer ausgebildet ist als die verlängerten Laschen 26 und auf einer Stromschiene 40 für den Sternpunkt aufliegen.

Nach Einsetzen der Formteile dieser ersten (Teil-)Lage der Wicklung werden in einem zweiten - nicht dargestellten - Verfahrensschritt die abgeflachten Laschen 26' und 26 mit den darunterliegenden Stromschienen verbunden.

Wie in Fig. 10c dargestellt, werden daraufhin von der gegenüberliegenden (in der Zeichnung unten liegenden) Stirnseite in die übriggebliebenen Nuten je ein Formteil 2 in Richtung des Pfeils Q eingesetzt, und zwar derart, daß die Verbindungsleiter 6b der Formteile 2 in der Zeichnung nach rechts zeigen. Die abgeflachten Laschen 10b am freien Ende der Nutstäbe 8b der Formteile 2 kommen jeweils auf dem freien Ende eines Verbindungsleiters 6 eines Formteils 3 zu liegen. Sind alle Formteile 2 dieser Wicklungslage eingesetzt, werden die abgeflachten Laschen 10b mit den darunterliegenden freien Enden der Formteile 6 verbunden.

Fig. 10c zeigt den Ständerkörper am Ende des darauffolgenden Verfahrensschritts, in dem von der in der Zeichnung oben liegenden Stirnseite des Ständerkörpers in jede zweite Nut 1, 3, 5, 7, etc. Formteile 1 in Richtung des Pfeils P eingeschoben werden, so daß sie genau über den in Schritt 1 eingesetzten Formteilen 3 zu liegen kommen. Die abgeflachten Laschen 10a der Formteile 1 liegen jeweils auf dem freien Ende eines Verbindungsleiters 6 eines der in Schritt 3 eingesetzten Formteile 2. Nachdem alle Formteile 1 eingesetzt sind, werden die abgeflachten Laschen 10a der Formteile 1 mit den darunterliegenden Verbindungsleitern 6 der Formteile 2 verbunden.

Die in Fig. 10b und 10c dargestellten Verfahrensschritte werden so lange wiederholt, bis die Nuten mit Ausnahme der obersten Wicklungslage mit Nutstäben aufgefüllt sind. Dann wird anstatt des in Fig. 10b gezeigten Schritts, bei dem von der unteren Stirnseite Formteile vom Typ 2 eingesetzt werden, U-förmige Formteile vom Typ 4 eingesetzt, wie in Fig. 11gezeigt. In der Zeichnung sind noch nicht alle U-Formteile vollständig eingeschoben. Die schraffiert dargestellten U-Formteile 4 weisen jeweils zwei Nutstäbe 8b und 8b' auf, die in die Nuten 2 und 8, 4 und 10, 6 und 12 eingesetzt werden. In jeder zweiten Nut liegt also ein Nutstabschenkel eines U-Formteils. Die Verbindungsleiter 7 der U-Formteile sind auf der unten liegenden Stirnseite des Ständerkörpers ebenso schuppenartig übereinandergeschichtet wie die Verbindungsleiter 6 der L-Formteile. Die Verbindungsleiter 7 sind aber jeweils um einen Nutabstand länger ausgebildet als die Verbindungsleiter 6 der L-Formteile. Daher kommen die abgeflachten Laschen 10b der Nutstäbe 8b, 8b' der U-Formteile jeweils auf den freiliegenden Enden von zu verschiedenen Spulen gehörenden Verbindungsleitern 6a von Formteilen 1 zu liegen und werden in einem letzten Verfahrensschritt mit diesen verbunden.

Durch die U-Formteile werden jeweils zwei wendelförmige Spulen in Reihe geschaltet. Dies wird im Folgenden im Zusammenhang mit Fig. 12 näher erläutert. Wie vorstehend erwähnt, zeigt Fig. 12 eine stark schematisierte Darstellung einer Draufsicht auf eine Stirnseite eines bewickelten Ständerkörpers, und zwar die in den Fig. 10 und 11 unten liegende Stirnseite. Fig. 12 zeigt die Rücken der in mehreren Lagen 30 übereinandergeschichteten Verbindungsleiter 6b. Zur besseren Veranschaulichung ist die aktuelle Stromrichtung in einem der Stränge durch Pfeile gekennzeichnet. Der als durchgezogene Linie eingezeichnete Strang U beginnt mit einem Anschluß an eine Stromschiene bei Punkt A. Von dort wird der Strang in einer wendelförmigen Spule 50 über vier Wicklungslagen bzw. vier Verbindungsleiterlagen 30 zum Nutkopf geführt. Die gepunktete Linie stellt einen Verbindungsleiter 6 auf der gegenüberliegenden Stirnseite des Läuferkörpers dar. Mit diesem Verbindungsleiter wird ein U-Formteil verbunden, dessen Verbindungsleiter 7 auf der gezeigten Stirnseite verläuft. Durch das U-Formteil werden zwei gleich aufgebaute Spulen 50 und 52 derart in Reihe geschaltet, daß der Strom durch die beiden Spulen gegensinnig fließt, wie durch die Pfeilrichtungen deutlich wird. In der wendelförmigen Spule 52 fließt der Strom demnach in dem gezeigten Augenblick vom Nutkopf zum Nutboden, während er in der Spule 50 von Nutboden zum Nutkopf fließt. Bei Punkt B ist der Strang an den Sternpunkt angeschlossen. Auch die beiden anderen, gestrichelt bzw. strichpunktiert gezeichneten Stränge weisen Anschlüsse an die Stromschienen sowie entsprechende U-Formteile mit Verbindungsleitern 7 auf, die in Fig. 12 nicht eingezeichnet sind.

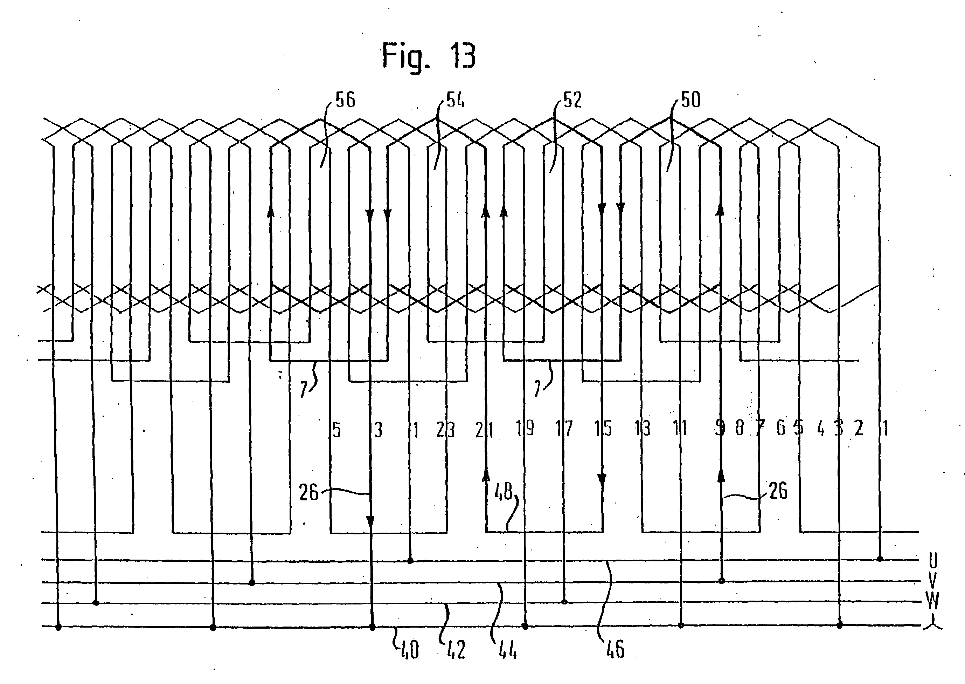

Fig. 13 zeigt das Wickelschema, nach dem die in den Fig. 1 bis 12 gezeigte Wicklung ausgeführt ist. Es zeigt, wie die einzelnen Spulen in den Nuten des Ständerkörpers verteilt sind, wobei bei dieser Wicklung in jeder Nut nur eine Spulenseite liegt (Einschichtwicklung). Das Wickelschema wiederholt sich alle 12 Nuten. Die Wicklung ist als Dreiphasenwicklung (Drehstromwicklung) mit zwei Nuten je Pol und Strang (Zwei-Loch-Wicklung) ausgeführt. Daraus ergibt sich eine Polteilung von sechs, d.h. die magnetischen Pole liegen in einem Abstand von sechs Nuten zueinander. In einer Durchmesserwicklung wäre demnach auch die Spulenweite, d.h. der in Nuten ausgedrückte Abstand der beiden Spulenseiten einer Spule, gleich sechs. Bei der in Fig. 13 gezeigten Wicklung ist die Spulenweite aber kleiner als die Polteilung, nämlich gleich fünf, es handelt sich also um eine sog. gesehnte Wicklung. Durch die Sehnung wird hier erreicht, daß an den Stirnseiten des Ständerkörpers maximal die Wickelköpfe von drei Spulen aneinander vorbeigeführt werden. Für die vorstehend beschriebenen Ausführungsformen der Wicklung bedeutet das, daß eine kompakt Wickelkopfanordnung erreicht wird, wenn die Dicke h der Verbindungsleiter ein Drittel oder weniger der Dicke H der Nutstäbe beträgt.

Zwecks Anschaulichkeit ist ein Strang V in Fig. 13 fett hervorgehoben. Die anderen Stränge U, W verlaufen entsprechend. Der Strang V umfaßt zwei in Reihe geschaltete Spulen 50, 52, die hier vereinfacht als geschlossene Ringe dargestellt sind - tatsächlich handelt es sich bei ihnen um Wendel mit z.B. acht Windungen. Die Spule 50 ist elektrisch einerseits mit der Stromschiene 44 für Strang V verbunden und andererseits über ein 6 Nuten überbrückendes Verbindungsstück 7, das z.B. Teil eines U-Formteils sein kann, mit der Spule 52. Diese ist (bei einer in Fig. 13 nicht dargestellten Ausführungsform) elektrisch mit der mit Y gekennzeichneten Stromschiene für den Sternpunkt 40 verbunden. Die augenblickliche Stromrichtung ist durch Pfeile angegeben. Die beiden Spulen 50, 52 liegen mit ihren einander zugewandten Spulenseiten in benachbarten Nuten, so daß der Strom in den beiden benachbarten Nuten in die gleiche Richtung fließt. Zwischen den Spulenseiten einer Spule 50, 52 liegen jeweils 4 Spulenseiten von Spulen anderer Stränge.

Die Anordnung der Wickelköpfe geht aus dem Wickelschema der Fig. 13 nicht hervor. Werden die Verbindungsleiter jedoch wie vorstehend beschrieben kompakt geschichtet, so verbleiben kaum Zwischenräume in dem dicht gepackten "Wickelkopfpaket". Die für die Reihenschaltung zweier Spulen benötigten Verbindungsstücke 7 befinden sich deshalb vorteilhaft entweder am Nutkopf oder am Nutboden, also am Rand des Wickelkopfpakets. Besteht die Wicklung im wesentlichen aus wendelförmigen Spulen, (also Spulen, bei denen sich die Verbindungsleiter in Radialrichtung nicht überschneiden), so werden durch ein Verbindungsstück 7 jeweils zwei Spulen 50, 52 derart in Reihe geschaltet, daß zu einem Zeitpunkt in der einen Spule der Strom in Richtung Nutkopf und in der anderen in Richtung Nutboden fließt. Da die beiden Spulen 50, 52 jedoch bei der oben beschriebenen Schichtung der Verbindungsleiter vom Aufbau her identisch sind, werden die beiden Spulen 50 und 52 durch das Verbindungsstück 7 so in Reihe geschaltet, daß der Strom durch die beiden Wendeln gegensinnig, also mit entgegengesetztem Drehsinn, fließt. Durch diese Hintereinanderschaltung befinden sich automatisch auch die Anschlüsse der Stränge zu den Stromschienen für die Stromzufuhr 42, 44, 46 sowie für den Sternpunkt 40 sämtlich auf einer radialen Seite des Wickelkopfpakets, und zwar auf der anderen Seite wie die Verbindungsstükke. Vorteilhaft sind auf dieser Seite auch die Stromschienen angeordnet.

Alternativ sind jeweils 4 oder eine andere gerade Anzahl von Spulen in Reihe geschaltet, wie in Fig. 13 gezeigt. Bei dem Wickelschema der Fig. 13 sind jeweils zwei Paare in Reihe geschalteter Spulen wiederum durch ein weiteres Verbindungsstück 48 in Reihe geschaltet. Die Verbindungsstücke 48 können gleich ausgebildet sein wie die Verbindungsstücke 7; nach einer anderen Ausführungsform bilden sie - wie nachstehend genauer beschrieben-Sektoren einer zusätzliche Stromschiene.

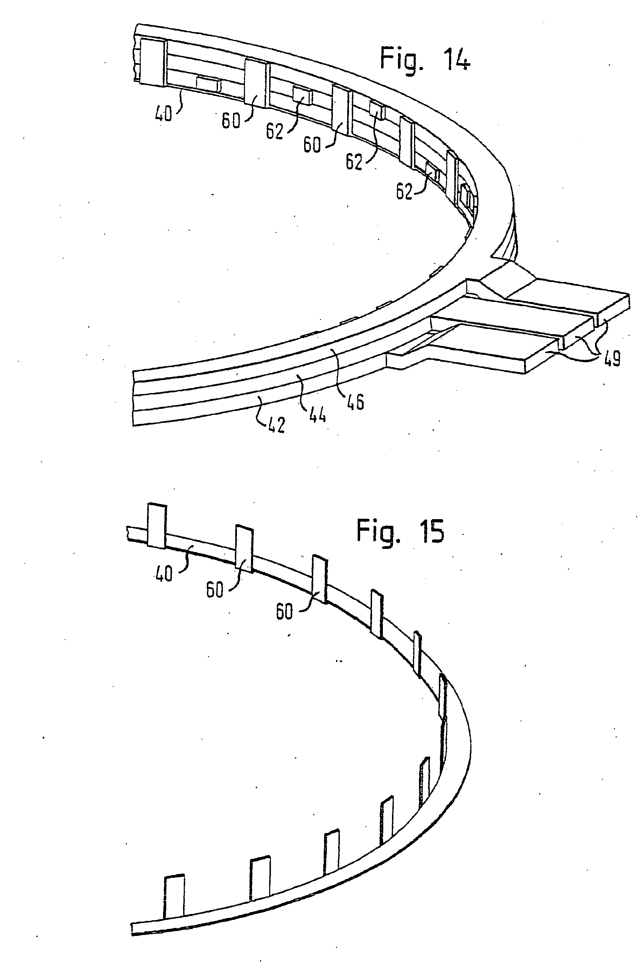

Fig. 14-19 zeigen Beispiele für kompakte Ausführungen des Stromschienenpakets. Die Stromschienen umlaufen den Ständer, so daß entlang der Umfangsrichtung mehrere parallelgeschaltete Spulen oder Spulengruppen an sie angeschlossen werden können. Da durch die der Stromzufuhr dienenden Stromschienen in der Regel ein hoher Strom fließt, weisen die Stromschienen zur Minimierung der ohmschen Verluste einen relativ großen Querschitt auf und nehmen daher viel Raum in Anspruch. Um die axiale Ausdehnung des Ständers möglichst klein zu halten, sind die Stromschienen in den gezeigten Beispielen in dem Bereich radial neben den Nutöffnungen an einer Stirnseite eines Ständerkörpers angeordnet. Bei der vorstehend beschriebenen kompakten Wickelkopfanordnung bleibt diese Fläche an den Stirnseiten nämlich ohnehin frei und kann daher platzsparend für die Stromzufuhr genützt werden. Die gezeigten Stromschienenpakete sind daher insbesondere zum Anschließen der vorstehend beschriebenen Wicklung geeignet, können aber prinzipiell mit jeder beliebigen Wicklung kombiniert werden.

Eine beispielhafte Anordnung der Stromschienen für eine Drehstromwicklung gemäß einer ersten Ausführungsform ist in Fig. 14 gezeigt. Die Stromschienen sind hier, wie gesagt, in Richtung der Nuttiefe unterhalb der Wickelköpfe angeordnet und über Anschlüsse 49 mit der Drehstromquelle verbunden. Die in Fig. 14 dargestellten Stromschienen sind in der Längsrichtung der Nuten, also in Axialrichtung, übereinandergeschichtet, so daß jede einzelne Stromschiene direkt an die radial innen liegenden Wickelköpfe anliegt. Die Verbindungsstellen 60, 62 zum Anschließen der Stränge an die Stromschienen sind daher auf der radialen Innenseite der Stromschienen angeordnet. Die Wicklung kann daher direkt und ohne weitere Verbindungsstükke mit den Stromschienen 40, 42, 44, 46 verlötet werden, z.B. wenn die Wicklung teilweise aus speziellen Formteilen 3 mit verlängerten Laschen 26 am Nutstabende aufgebaut ist, die bis zu den Verbindungsstellen 60, 62 reichen.

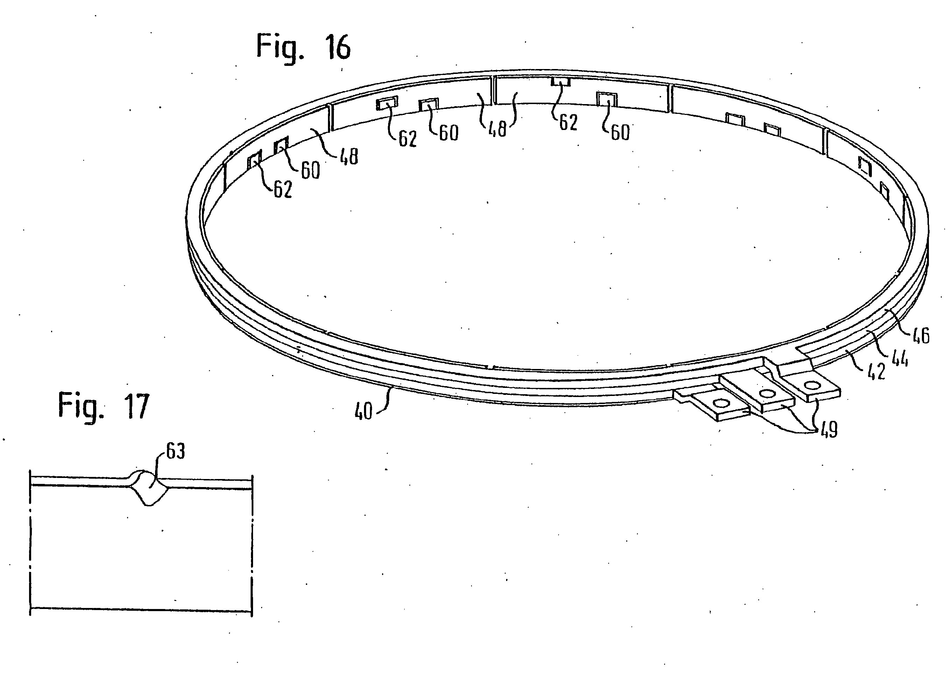

Hierbei muß jedoch gewährleistet sein, daß jede verlängerte Lasche 26 nur eine der Stromschienen 40, 42, 44 oder 46 kontaktiert. Zu diesem Zweck sind die Stromschienen 42, 44, 46 mit einer elektrisch isolierenden Beschichtung versehen, welche an den Verbindungsstellen 62 Fenster aufweist, die derart zueinander versetzt sind, daß jede Lasche 26 maximal ein Fenster kontaktiert. Gemäß einer anderen, in Fig. 14, 16 und 17 gezeigten Variante weisen die Stromringe an den Kontaktstellen 62 Erhöhungen, sog. Schweißbukkel 63 auf, welche radial nach innen ausragen. Wird eine verlängerte Lasche 26 mit einem Schweißbuckel 63 kontaktiert und verschweißt, wird sie somit gleichzeitig auf Abstand von den anderen Stromschienen gehalten. Der Schweißbuckel 63 wird z.B. in die Stromschienen 42, 44, 46 eingeprägt, indem die Stromschienen 42, 44, 46 an den Stellen, wo ein Schweißbuckel 63 entstehen sollen, in Axialrichtung gepreßt werden, so daß sich ein Buckel 63 aus verdrängtem Material auf der radial innen liegenden Seite der Stromschiene bildet. Das herausgedrängte Material kann z.B. die Form einer vorstehenden Fahne haben (siehe Fig. 17).

Die Wicklung ist aber ggf. nicht nur mit den Stromschienen für die Stromzufuhr verbunden, sondern auch mit einer Stromschiene für die Verbindung der drei Stränge, dem sog. Sternpunkt. Alternativ können die Stränge auch im Dreieck geschaltet sein, so daß keine Stromschiene für den Sternpunkt benötigt wird. Da die Ströme in den drei Phasen einer Drehstromquelle jeweils um 120° zueinander phasenverschoben ist, ist die im Sternpunkt fließende Summe dieser Ströme zu jedem Zeitpunkt beinahe gleich null. Die Stromschiene für den Sternpunkt 40 weist daher, um Platz zu sparen, eine geringere Querschnittfläche auf als die Stromschienen 42, 44, 46 für die Stromzufuhr, und zwar ist sie in Axialrichtung dünner als die übrigen Stromschienen 42, 44, 46. Da die Sternpunkt-Stromschiene 40 im in Fig. 14 gezeigten Beispiel zu dünn ist, daß an der inneren Radialfläche ein Formteil der Wicklung aufgeschweißt werden könnte, weist sie anstatt Schweißbuckeln 63 Laschen 60 auf, die sich in Axialrichtung über die radialen Innenflächen der anderen Stromschienen erstrecken. Auf diese Laschen 60 kann z.B. die verlängerte Lasche 26 eines Formteils 3 aufgeschweißt werden. Zur besseren Anschaulichkeit ist die Stromschiene für den Sternpunkt 40 mit den Laschen 60 in Fig. 15 ohne die anderen Stromschienen dargestellt.

Das in Fig. 14 gezeigte Stromschienenpaket ist zum Anschließen einer Dreiphasenwicklung mit beliebigem Wickelschema geeignet. Das in Fig. 16 gezeigte Stromschienenpaket ist hingegen insbesondere zum Anschließen der Ausführungsform einer Drehstromwicklung mit jeweils vier in Reihe geschalteten Spulen geeignet. Es weist die gleichen Komponenten auf wie das in Fig. 14, insbesondere drei axial geschichtete Stromschienen 42, 44, 46 zum Anschließen der Wicklung an die elektrische Stromzufuhr, welche jeweils als Schweißbuckel 63 ausgebildete Verbindungsstellen 62 aufweisen, sowie eine Stromschiene 40 für den Sternpunkt, welche mit Laschen 60 ausgerüstet ist, die sich über die radiale Innenfläche zumindest einer der Stromschienen erstrecken. Zusätzlich weist es noch eine weitere Schiene, nämlich eine Sektorstück-Stromschiene 48 auf, welche auf der radial innen liegenden Seite des Stromschienenpakets angeordnet ist, wobei die Verbindungsstellen 60 und 62 der übrigen Stromschienen 40, 42, 44, 46 durch entsprechende Ausnehmungen in der Sektorstromschiene 48 zugänglich und mit der Wicklung kontaktierbar sind. Die Sektorstück-Stromschiene 48 ist nicht durchgehend, sondern besteht aus elektrisch voneinander isolierten Sektorstücken. Diese bilden jeweils die im Wickelschema der Fig. 13 mit 48 gekennzeichneten Verbindungsstücke zwischen zwei Paaren von in Reihe geschalteten Spulen. Hierfür werden mit den beiden Enden eines Sektors 48 die verlängerten Laschen 26 von Formteilen 3 der zu verschiedenen Spulenpaaren gehörenden Spulen 52 und 54 verbunden.

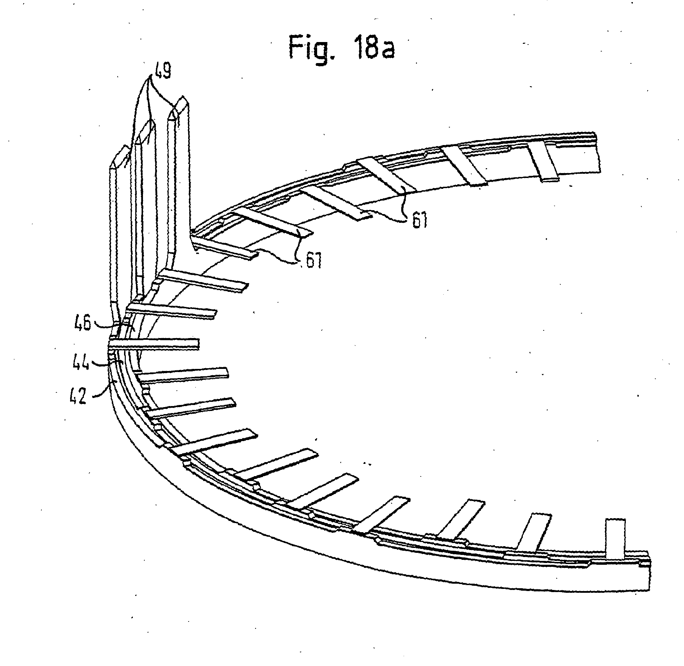

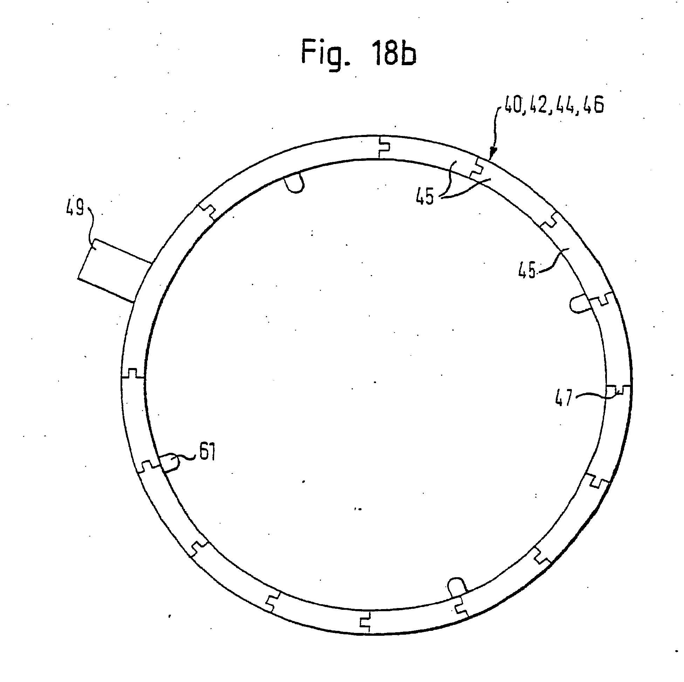

Gemäß einer anderen Ausführungsform sind die Stromschienen nicht axial, sondern radial übereinandergeschichtet, wie in Fig. 18a gezeigt. In dieser Anordnung ist nur eine Stromschiene 46 direkt an die Wickelköpfe angrenzend angeordnet, während die anderen Stromschienen 42, 44 keinen direkten Zugang zur Wicklung haben. Daher sind alle Stromschienen mit Laschen 61 ausgerüstet, welche radial nach innen, ggf. über andere Stromschienen oder über die Wickelköpfe ragen. Zum Anschließen der Wicklung werden diese Laschen 61 z.B. an ihrem Ende nach innen umgebogen und die verlängerte Lasche 26 eines Formteils 3 auf das umgebogene Ende aufgeschweißt. Auch bei diesem Ausführungsbeispiel kann eine in Sektoren unterteilte Stromschiene 48 radial auf der Innenseite des Stromschienenpakets angeordnet werden, oder eine Stromschiene für den Sternpunkt radial auf der Innenseite oder axial über den anderen Stromschienen 42, 44, 46 untergebracht werden. Die Stromschienen können z.B. durch Ausschneiden eines Rings aus einer Platte hergestellt werden. Hierbei fällt jedoch relativ viel Verschnitt an. Bevorzugt werden die Stromschienen daher durch Biegen aus einem Stab mit geeignetem Querschnitt hergestellt oder aus einzelnen Ringsektoren zusammengesetzt. Fig. 18b zeigt eine solche aus einzelnen Ringsektoren zusammengesetzte Stromschiene 40, 42, 44, 46. Die Sektoren werden bevorzugt durch Preßpassen miteinander verbunden, indem z.B. Fortsätze 47 in entsprechende Ausnehmungen in den Sektorenenden eingepreßt werden. Vorteilhaft werden die Stromschienen derart zu einem Paket zusammengesetzt, daß die Verbindungsstellen zwischen den Sektoren von übereinander liegenden Stromschienen gegeneinander versetzt sind, um die Stabilität des Stromschienenpakets zu erhöhen.

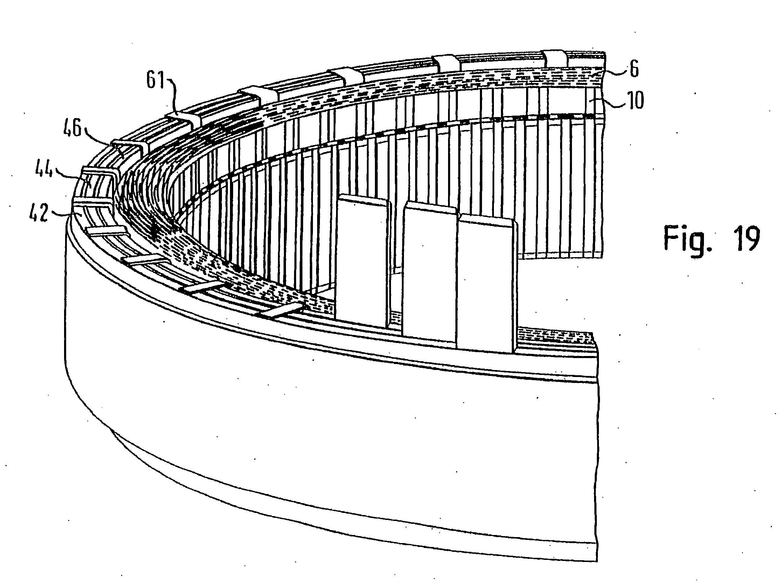

Fig. 19 zeigt ein Ausführungsbeispiel einer Wicklung in einem Ständer einer elektrischen Radialfeldmaschine mit einem Stromschienenpaket, welches etwa dem in Fig. 18 gezeigten entspricht. Die raumsparende Ausnützung des Platzes auf der Stirnseite des Ständerkörpers 32 wird hier sehr deutlich, ebenso wie die verschränkte Anordnung der Verbindungsleiter 6 überlappender Spulen.

Die in den Ausführungsbeispielen beschriebenen Wicklungen sind mit nur wenigen verschiedenen, einfachen Formteilen herstellbar und zeichnen sich durch eine raumsparende Anordnung der Wickelköpfe aus.

## Patentansprüche

1. Wicklung für eine elektrische Maschine mit einem Ständer und/oder Läufer mit Nuten (34), wobei die Wicklung mehrere überlappende Spulen (50, 52, 50', 52', 50' ', 52") mit jeweils wenigstens einer vollständigen, aus Formteilen (1, 2, 3) hergestellten Windung umfaßt, wobei die Spulen (50, 52, 50', 52', 50", 52") Nutstäbe (8) und an den Stirnseiten des Ständers bzw. Läufers liegende Verbindungsleiter (6) aufweisen, wobei die Verbindungsleiter (6) der überlappenden Spulen (50, 52, 52', 50", 52") verschränkt und somit in Lagen (28, 30) angeordnet sind, **dadurch gekennzeichnet, daß** die Wicklung durch lagenweises Einsetzen von L-förmigen Formteilen (1, 2, 3) in die Nuten (34) und Verbinden von Formteil-Verbindungstellen (13, 16), die von den L-förmigen Formteilen (1, 2, 3) der nächsten eingesetzten Lage (28, 30) von Formteilen (1, 2, 3) verdeckt werden, hergestellt ist.

2. Wicklung für eine elektrische Maschine mit einem Ständer und/oder Läufer (32) mit Nuten (34) nach Anspruch 1, **dadurch gekennzeichnet, daß** die Formteile (1, 2, 3) an den Formteil-Verbindungstellen (13, 16) verlötet sind.

3. Wicklung für eine elektrische Maschine mit einem Ständer und/oder Läufer (32) mit Nuten (34) nach Anspruch 1 oder 2, **dadurch gekennzeichnet, daß** jeweils ein Schenkel eines L-förmigen Formteils einen in einer Nut liegenden Nutstab (8a, 8b) und der andere Schenkel einen an einer Stirnseite des Ständers bzw. Läufers liegenden Verbindungsleiter (6a, 6b) bildet.

4. Wicklung für eine elektrische Maschine mit einem Ständer und/oder Läufer mit Nuten (34) nach einem der Ansprüche 1 bis 3, **dadurch gekennzeichnet, daß** die Wicklung mehrere Spulen umfaßt, die aus in den Nuten liegenden Nutstäben (8) und aus an den Stirnseiten des Ständers bzw. Läufers liegenden Verbindungsleitern (6) aufgebaut sind, wobei die Verbindungsleiter (6) flacher als die Nutstäbe (8) ausgebildet sind, wobei die Wicklung als eine gesehnte Mehrphasenwicklung mit 2 Nuten (34) pro Pol und Strang ausgeführt ist.

5. Wicklung für eine elektrische Maschine mit einem Ständer und/oder Läufer mit Nuten (34) nach einem der Ansprüche 1 bis 3, **dadurch gekennzeichnet, daß** die Wicklung mehrere Spulen (50, 52, 50', 52', 50", 52") umfaßt, die aus in den Nuten liegenden Nutstäben (8) und aus an den Stirnseiten des Ständers bzw. Läufers liegenden Verbindungsleitern (6) aufgebaut sind, wobei mindestens zwei Spulen (50,52) in Reihe geschaltet sind, wobei der Strom eine der Spulen (50) in Richtung Nutkopf und die andere Spule (52) in Richtung Nutboden durchfließt.

6. Wicklung nach Anspruch 5, **dadurch gekennzeichnet, daß** jeweils zwei hintereinander geschaltete Spulen (50, 52) durch ein U-förmiges Verbindungsstück (4) in Reihe geschaltet sind, welches von zwei Nutstabschenkeln (8b, 8b') und einem Verbindungsleiterabschnitt (7) gebildet wird.

7. Wicklung nach Anspruch 5 oder 6, **dadurch gekennzeichnet, daß** der Strom durch zwei hintereinander geschaltete Spulen (50, 52) mit entgegengesetztem Drehsinn fließt.

8. Wicklung nach einem der Ansprüche 5 bis 7, **dadurch gekennzeichnet, daß** die Anfänge (26) der Spulen sämtlich auf der - in Richtung der Nuttiefe - gleichen Seite der Verbindungsleiter (6) angeordnet sind.

9. Wicklung nach einem der vorhergehenden Ansprüche, **dadurch gekennzeichnet, daß** die Verbindungsleiter (6) flacher und breiter als die Nutstäbe (8) ausgebildet sind.

10. Wicklung nach einem der vorhergehenden Ansprüche, **dadurch gekennzeichnet, daß** bei überlappenden Spulen (50, 52, 50', 52', 50", 52") die Verbindungsleiter (6) um so viel flacher als die Nutstäbe (8) ausgebildet sind, daß die zu einer Lage von Nutstäben (8) gehörende Lage (28, 39) von Verbindungsleitern (6) nicht höher als ein Nutstab (8) ist.

11. Wicklung nach einem der vorhergehenden Ansprüche, **dadurch gekennzeichnet, daß** die Verbindungsleiter (6) an den Stirnseiten des Ständers bzw. Läufers jeweils schräg zu der Verbindungslinie der beiden Nuten (34), deren Nutstäbe (8) durch die jeweiligen Verbindungsleiter (6) verbunden sind, verlaufen.

12. Wicklung nach einem der vorhergehenden Ansprüche, **dadurch gekennzeichnet, daß** eine Spule (50, 52, 50', 52', 50", 52") dadurch gebildet ist, daß die auf einer Stirnseite gelegenen Verbindungsleiter (6a) Nutstäbe (8a, 8b) der gleichen Lage verbinden und die auf der anderen Stirnseite gelegenen Verbindungsleiter (6b) Nutstäbe (8a, 8b) aus - in Richtung der Nuttiefe - übereinanderliegenden Lagen.

13. Wicklung nach einem der vorhergehenden Ansprüche, **dadurch gekennzeichnet, daß** die Formteile aus mehreren Schichten aufgebaut sind.

14. Wicklung nach einem der vorhergehenden Ansprüche, **dadurch gekennzeichnet, daß** die L-förmigen Formteile (1, 2, 3) aus zwei stabförmigen I-Formteilen mit unterschiedlicher Querschnittsform und/oder Querschnittsfläche hergestellt sind.

15. Wicklung nach einem der vorhergehenden Ansprüche, **dadurch gekennzeichnet, daß** die Nutstäbe (8a, 8b) der L-förmigen Formteile an ihrem freien Ende eine abgeflachte Lasche (10a, 10b) aufweisen.

16. Wicklung nach Anspruch 15, **dadurch gekennzeichnet, daß** die Verbindungsleiter (6a, 6b) der L-förmigen Formteile an ihrem freien Ende eine Verbindungsstelle (16) aufweisen, auf die zum Verbinden mit einem zweiten Formteil die abgeflachte Lasche (10a, 10b) des zweiten Formteils aufsetzbar ist.

17. Wicklung nach einem der vorhergehenden Ansprüche, **dadurch gekennzeichnet, daß** zwischen einem Nutstab (8) und dem mit diesem verbundenen Verbindungsleiter (6) keine Kröpfung in Richtung der Nuttiefe (8) vorhanden ist.

18. Wicklung nach einem der Ansprüche 4 bis 17, **dadurch gekennzeichnet, daß** die Wicklung als dreiphasige Zweilochwicklung mit einer Spulenweite von 5 Nuten ausgeführt ist.

19. Wicklung nach einem der vorhergehenden Ansprüche, **dadurch gekennzeichnet, daß** mehrere parallelgeschaltete Spulen oder Spulengruppen an einer umlaufenden Stromschiene angeschlossen sind.
